(19) Europäisches Patentamt
European Patent Office
Office européen des brevets

(11) **EP 1 173 944 B1**

(12) **EUROPÄISCHE PATENTSCHRIFT**

(45) Veröffentlichungstag und Bekanntmachung des Hinweises auf die Patenterteilung:
**09.02.2005   Patentblatt 2005/06**

(51) Int Cl.$^7$: **H04J 13/00**, H04L 7/04, H04B 1/707, H04B 7/26

(21) Anmeldenummer: **00916836.0**

(22) Anmeldetag: **15.02.2000**

(86) Internationale Anmeldenummer:
**PCT/EP2000/001231**

(87) Internationale Veröffentlichungsnummer:
**WO 2000/067404 (09.11.2000 Gazette 2000/45)**

(54) **VERFAHREN ZUR BILDUNG BZW. ERMITTLUNG EINER SIGNALFOLGE, VERFAHREN ZUR SYNCHRONISATION, SENDEEINHEIT UND EMPFANGSEINHEIT**

METHOD FOR FORMING AND DETERMINING A SIGNAL SEQUENCE, METHOD OF SYNCHRONIZATION, TRANSMITTER UNIT AND RECEIVER UNIT

PROCEDE POUR LA FORMATION ET LA DETERMINATION D'UNE SEQUENCE DE SIGNAUX, PROCEDE DE SYNCHRONISATION, UNITE EMETTRICE ET UNITE RECEPTRICE

(84) Benannte Vertragsstaaten:
**DE ES FR GB IT**

(30) Priorität: **29.04.1999  DE 19919545**
**18.05.1999  EP 99109791**

(43) Veröffentlichungstag der Anmeldung:
**23.01.2002   Patentblatt 2002/04**

(73) Patentinhaber: **SIEMENS AKTIENGESELLSCHAFT**
**80333 München (DE)**

(72) Erfinder:
• **RAAF, Bernhard**
**D-81475 München (DE)**
• **MICHEL, Jürgen**
**D-81737 München (DE)**

(56) Entgegenhaltungen:
**WO-A-00/14915          WO-A-96/39749**

• **SRDJAN BUDISIN: "GOLAY COMPLEMENTARY SEQUENCES ARE SUPERIOR TO PN SEQUENCES" PROCEEDINGS OF THE INTERNATIONAL CONFERENCE ON SYSTEMS ENGINEERING, US, NEW YORK, IEEE, Bd. -, 1992, Seiten 101-104, XP000319401 ISBN: 0-7803-0734-8**
• **BUDISIN S Z: "NEW COMPLEMENTARY PAIRS OF SEQUENCES" ELECTRONICS LETTERS, GB, IEE STEVENAGE, Bd. 26, Nr. 13, 21. Juni 1990 (1990-06-21), Seiten 881-883, XP000107922 ISSN: 0013-5194**
• **MASKARA S L ET AL: "CONCATENATED SEQUENCES FOR SPREAD SPECTRUM SYSTEMS" IEEE TRANSACTIONS ON AEROSPACE AND ELECTRONIC SYSTEMS, US, IEEE INC. NEW YORK, Bd. AES-17, Nr. 3, Mai 1981 (1981-05), Seiten 342-350, XP000791008 ISSN: 0018-9251**

**Beschreibung**

Die Erfindung betrifft ein Verfahren zur Synchronisation einer Basisstation mit einer Mobilstation, eine Basisstation und eine Mobilstation.

Bei Signalübertragungssystemen, wie beispielsweise Mobilfunksystemen, ist es erforderlich, daß einer der Kommunikationspartner (erste Übertragungseinheit) bestimmte festgelegte Signale erkennt, die von einem anderen Kommunikationspartner (zweite Übertragungseinheit) ausgesandt werden. Dabei kann es sich beispielsweise um sogenannte Synchronisierungs-Bursts (Synchronisierungs-Funkblöcke) zur Synchronisierung zweier Synchronisationspartner, wie beispielsweise Funkstationen, oder um sogenannte Access-Bursts handeln.

Um derartige Empfangssignale gegenüber dem Umgebungsrauschen zuverlässig zu erfassen bzw. zu identifizieren, ist es bekannt, das Empfangssignal fortlaufend über eine festgelegte Zeitdauer mit einer vorgegebenen Signalfolge zu korrelieren und die Korrelationssumme über die Zeitdauer der vorgegebenen Signalfolge zu bilden. Der Bereich des Empfangssignals, der eine maximale Korrelationssumme ergibt, entspricht dem gesuchten Signal. Dem Synchronisationssignal von der Basisstation eines digitalen Mobilfunksystems ist beispielsweise eine Signalfolge als sogenannte Trainingssequenz vorgeschaltet, die auf die eben beschriebene Weise in der Mobilstation durch Korrelation mit der abgespeicherten Signalfolge erfaßt oder ermittelt wird. So können die Mobilstationen mit der Basisstation synchronisiert werden.

Auch in der Basisstation sind derartige Korrelationsberechnungen beispielsweise bei der Random-Access-Channel (RACH)-Detektion erforderlich. Außerdem wird eine Korrelationsberechnung auch zur Bestimmung der Kanalimpulsantwort und der Signallaufzeiten empfangener Signalbursts durchgeführt.

Die Korrelationssumme wird dabei wie folgt berechnet:

$$Sm = \sum_{i=0}^{n-1} E(i+m) * K(i)$$

wobei E(i) eine aus dem Empfangssignal abgeleitete Empfangssignalfolge und K(i) die vorgegebene Signalfolge ist, wobei i von 0 bis n-1 läuft. Die Korrelationssumme Sm wird aufeinanderfolgend für mehrere zeitlich versetzte, aus dem Empfangssignal gewonnene Signalfolgen E(i) berechnet, und dann der maximale Wert von Sm bestimmt. Sollen k aufeinanderfolgende Korrelationssummen berechnet werden, so beträgt der Berechnungsaufwand k * n Operationen, wobei eine Multiplikation und Addition zusammen als eine Operation gezählt wird.

Die Berechnung der Korrelationssummen ist daher sehr aufwendig und erfordert, insbesondere bei Real-Time-Anwendungen wie Sprachkommunikation oder Bildtelefonie oder in CDMA-Systemen, leistungsfähige und daher teure Prozessoren, die bei der Berechnung einen hohen Stromverbrauch aufweisen. Beispielsweise ist zur Synchronisation des sich in der Standardisierung befindlichen UMTS-Mobilfunksystems eine bekannte Signalfolge der Länge 256 Chips (bei CDMA wird ein übertragenes Bit auch Chip genannt) zu ermitteln. Die Folge wird alle 2560 Chips wiederholt. Da die Mobilstation anfangs asynchron zum Chiptakt arbeitet, muß das Empfangssignal überabgetastet werden, um auch bei ungünstiger Abtastlage noch ein ausreichendes Signal zu erhalten. Dies führt aufgrund der Abtastung der I-und Q-Komponente zu 256*2560*2*2 = 2621440 Operationen.

Aus der WO 96 39749 A ist es bekannt, eine Synchronisationsfolge zu übertragen, wobei ein Chip der Folge selbst eine Folge ist.

Aus "Srdjan Budisin: Golay Complementary Sequences are Superior to PN Sequences, Proceedings of the International Conference on Systems Engineering, US, New York, IEEE, Bd.- ,1992, Seiten 101-104, XP 000319401 ISBN: 0-7803-0734-8" ist es bekannt, als Alternative zu PN-Folgen Golaysequenzen zu verwenden.

Aus "Budisin S Z: 'New Complementary Pairs of Sequences' Electronics Letters, GB, IEE Stevenage, BD. 26, Nr 13, 21.Juni 1990 (1990-06-21), Seiten 881-883, XP000107922 ISSN: 0013-5194" ist es bekannt, Paare komplementärer Golaysequenzen rekursiv zu bilden.

Der Erfindung liegt die Aufgabe zugrunde, Verfahren zur Synchronisation einer Basisstation mit einer Mobilstation, eine Basisstation und eine Mobilstation anzugeben, die eine zuverlässige und aufwandsgünstige Synchronisation einer Basisstation mit einer Mobilstation ermöglichen.

Gelöst wird die Aufgabe durch die Merkmale der unabhängigen Patentansprüche. Weiterbildungen sind den Unteransprüchen zu entnehmen.

Die Erfindung beruht zunächst auf dem Gedanken,. zur Synchronisation Signalfolgen zu verwenden, die bildbar sind, indem eine zweite Signalteilfolge der Länge n2 n1 mal wiederholt wird, dabei mit der ersten Signalteilfolge (Länge n1) moduliert wird, und zumindest eine der Signalteilfolgen eine Golaysequenz (Golayfolge), oft auch Golay Complementary Sequence genannt, ist. Dadurch können Signalfolgen gebildet werden, die, wenn sie in einer Empfangssignalfolge enthalten sind, leicht ermittelt werden können. Insbesondere ist die Verwendung von Golaysequenzen von Vorteil, weil hierfür zur Berechnung der Korrelation ein sehr effektiver Algorithmus bekannt ist.

Ferner basiert die Erfindung auf der Erkenntnis, daß durch die Verwendung zweier gleich langer Signalteilfolgen eine schnelle und aufwandsgünstige Berechnung von Korrelationssummen ermöglicht wird.

So kann beispielsweise bei der Verwendung einer hierarchischen Korrelationsfolge der Länge 256, die aus 2 konstituierenden Golaysequenzen der Länge 16 aufgebaut ist, als Synchronisationsfolge für den PSC (primären Synchronisationskanal) eines UMTS-Systems der Rechenaufwand gegenüber einer herkömmlichen Realisierung mittels einer Golaysequenz der Länge 256 von 15 auf 14 Additionen pro berechnetem Korrelatorausgangswert reduziert werden.

Die Autokorrelationsfunktion einer durch zwei Signalteilfolgen gebildeten Signalfolge K(i) hat allerdings im Gegensatz zu einem in herkömmlichen Verfahren verwendeten orthogonalen Gold-Code im allgemeinen schlechtere Autokorrelationseigenschaften. Sie weist beispielsweise höhere Nebenmaxima und einen höheren Effektivwert der Nebenminima auf. Außerdem zeigen UMTS-Link-Level-Simulationen, daß bei Verwendung derartiger Signalfolgen K(i) im PSC zur Slotsynchronisation bei einem Frequenzversatz (Frequenzfehler) zwischen Sender und Empfänger der Synchronisationsfehler im allgemeinen höher ist als bei Verwendung eines orthogonalen Gold-Codes.

Durch aufwendige eigens für diesen Zweck geschaffene Simulationswerkzeuge konnten jedoch aus zumindest einer Golaysequenz bestehende Signalteilfolgenpaare (K1(j);K2(k)) ermittelt werden, auf deren Basis, Signalfolgen K(i) gebildet werden können oder bildbar sind, die insbesondere auch bei einem höheren Frequenzversatz zwischen Sender und Empfänger zuverlässig ermittelt werden können und so zu einem geringen Synchronisationsfehler führen. Dabei wurde bei den Simulationen für das UMTS-System auch von einem Frequenzversatz von 10kHz ausgegangen. Durch die Verwendung einer bzw. eines derart gebildeten oder bildbaren Signalfolge K(i) bzw. Synchronisationscodes cp wird der Berechnungsaufwand zur Berechnung der Korrelationssummen, also zur Ermittlung der Signalfolge K(i) in der empfangenden Mobilstation MS zum Zwecke der Synchronisation, erheblich verringert ohne eine gleichzeitige Erhöhung des Synchronisationsfehlers in Kauf nehmen zu müssen. Außerdem kann dadurch auf den Einsatz teurer Quarze im Empfänger zur Frequenzstabilisierung verzichtet werden.

Bei diesen Simulationen stellte sich die Verwendung folgender Golaysequenzen als Signalteilfolge als besonders vorteilhaft heraus:

Eine Golaysequenz $X_n(k)$ der Länge nx=16, die durch folgende Beziehung bildbar ist:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

$k = 0, 1, 2, ..., 2^{NX}-1$
$n = 1, 2,' ..., NX$
$D_n = 2^{P_n}$
mit
$nx=16=2^{NX}$
$NX=4$
$\delta(k)$ Kroneckersche Deltafunktion,

- wobei die zur Bildung einer Signalteilfolge verwendete Permutation $P_1$, $P_2$, $P_3$, $P_4$ und Einheitsgröße $W_1$, $W_2$, $W_3$, $W_4$ folgender Menge von Permutation-Einheitsgrößen-Paaren ($P_1$ $P_2$ $P_3$ $P_4$ , $W_1$ $W_2$ $W_3$ $W_4$ ;) entnommen ist:
  3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1;.

Eine spezielle Weiterbildung der Erfindung sieht vor, daß die zur Bildung der Signalteilfolge verwendete Permutation $P_1$, $P_2$, $P_3$, $P_4$ und Einheitsgröße $W_1$, $W_2$, $W_3$, $W_4$ folgender Menge von Permutation-Einheitsgrößen-Paaren

($P_1 P_2 P_3 P_4$ , $W_1 W_2 W_3 W_4$ ;) entnommen ist: 3201, +1-1+1+1; 3201, -1-1-1+1; 3201, -1-1+1-1; 3201, +1-1-1-1; und/ oder daß die zur Bildung der zweiten Signalteilfolge verwendete Permutation ($P_1 P_2 P_3 P_4$ ) gleich 3201 ist. Dadurch kann wird zudem eine besonders günstige Realisierungsvariante der Erfindung in ASICs ermöglicht.

Durch Kenntnisse über die Signalteilfolgen in der Mobilstation kann die zur Synchronisation einer Mobilstation mit einer Basisstation erforderliche Berechnung von Korrelationssummen in der Mobilstation mit gegenüber dem Stand der Technik geringerem Aufwand durchgeführt werden.

Bei einer Weiterbildung der Erfindung werden einmal berechnete Teilkorrelationssummen abgespeichert und zur Berechnung weiterer Korrelationssummen verwendet. So ist es möglich, bei der Berechnung weiterer Korrelationssummen vorher schon berechnete Teilkorrelationssummen zu verwenden und so den Rechenaufwand enorm zu verringern.

Unter "Empfangssignalfolge" versteht man auch eine Signalfolge, die beispielsweise durch eine Demodulation, Filterung, Derotation, Skalierung oder Analog-/Digitalwandlung aus einem empfangenen Signal abgeleitet wurde.

Unter "Ermittlung einer Signalfolge" versteht man im Rahmen de Anmeldung natürlich auch die Ermittlung der zeitlichen Lage einer Signalfolge.

Im folgenden wird die Erfindung anhand verschiedener Ausführungsbeispiele näher beschrieben, zu deren Erläuterung die nachfolgend aufgelisteten Figuren dienen:

Figur 1 schematische Darstellung eines Mobilfunknetzes

Figur 2 Blockschaltbild einer Funkstation

Figur 3 herkömmliches Verfahren zur Berechnung von Korrelations summen

Figur 4 Darstellung erfindungsgemäßer Signalfolgen und Signalteilfolgen

Figur 5 schematische Darstellung der Bildung der erfindungsgemäßen Signalfolge

Figur 6,7 und 8 schematische Darstellung eines Verfahrens zur Berechnung einer Korrelationssumme

Figur 9 und 10 schematische Darstellung einer Ausführungsvariante eines Verfahrens zur Bildung der Korrelationssumme

Figur 11 Blockschaltbild eines effizienten hierarchischen Golay-Korrelators.

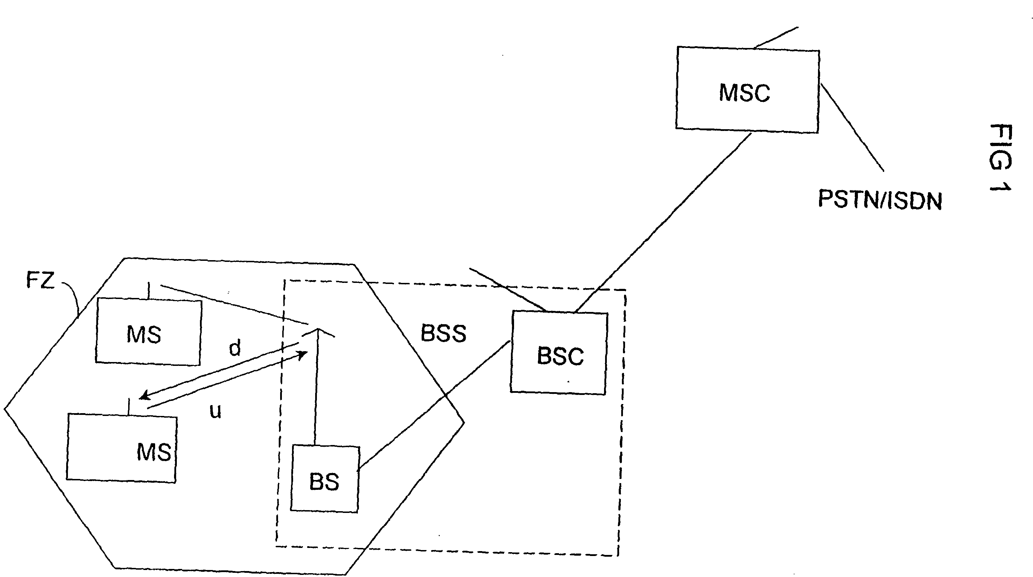

In Figur 1 ist ein zellulares Mobilfunknetz, wie beispielsweise das GSM (Global System for Mobile Communication)-System dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroller BSC verbunden, der auch durch ein Datenverarbeitungssystem gebildet sein kann. Eine ähnliche Architektur findet sich auch in einem UMTS (Universal Mobile Telecommunication System).

Jeder Basisstationscontroller BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignalen Informationen innerhalb von Funkkanälen f die innerhalb von Frequenzbändern b liegen, übertragen werden. Die Reichweite der Funksignale einer Basisstation definieren im wesentlichen eine Funkzelle FZ.

Basisstationen BS und ein Basisstationscontroller BSC können zu einem Basisstationssystem BSS zusammengefaßt werden. Das Basisstationssystem BSS ist dabei auch für die Funkkanalverwaltung bzw. -zuteilung, die Datenratenanpaßung, die Überwachung der Funkübertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie dem GSM-System, für den Uplink u (Mobilstation (Sendeeinheit) zur Basisstation (Empfangseinheit)) andere Frequenzbänder vorgesehen sein als für den Downlink d (Basisstation (Sendeeinheit) zur Mobilstation (Empfangseinheit)). Innerhalb der unterschiedlichen Frequenzbänder b können durch ein FDMA (Frequency Division Multiple Access) Verfahren mehrere Frequenzkanäle f realisiert werden.

Im Rahmen der vorliegenden Anmeldung versteht man unter Übertragungseinheit auch Kommunikationseinheit, Sendeeinheit, Empfangseinheit, Kommunikationsendgerät, Funkstation, Mobilstation oder Basisstation. Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme, wie CDMA-Systeme, insbesondere Wide-Band-CDMA-Systeme abgebildet werden.

Mittels Vielfachzugriffsverfahren können Daten über eine Funkschnittstelle effizient übertragen, separiert und einer oder mehreren bestimmten Verbindungen bzw. dem entsprechenden Teilnehmer zugeteilt werden. Dazu kann ein Zeitvielfachzugriff TDMA, ein Frequenzvielfachzugriff FDMA, ein Codevielfachzugriff CDMA oder eine Kombination aus mehreren dieser

Vielfachzugriffsverfahren eingesetzt werden.

Beim FDMA wird das Frequenzband b in mehrere Frequenzkanäle f zerlegt; diese Frequenzkanäle werden durch den Zeitvielfachzugriff TDMA in Zeitschlitze ts aufgeteilt. Die innerhalb eines Zeitschlitzes ts und eines Frequenzkanals f übertragenen Signale können durch verbindungsindividuelle den Daten aufmodulierte Spreizcodes, sogenannte CDMA-Codes cc separiert werden.

Die so entstehenden physikalischen Kanäle werden nach einem festgelegten Schema logischen Kanälen zugeordnet. Bei den logischen Kanälen unterscheidet man grundsätzlich zwei Arten: Signalisierungskanäle (bzw. Steuerkanäle) zur Übertragung von Signalisierungsinformationen (bzw. Steuerinformationen) und Verkehrskanäle (Traffic Channel TCH) zur Übertragung von Nutzdaten.

Die Signalisierungskanäle werden weiter unterteilt in:

- Broadcast Channels
- Common Control Channels
- Dedicated/Access Control Channel DCCH/ACCH

Zu der Gruppe der Broadcast Channels gehören der Broadcast Control Channel BCCH, durch den die MS funktechnische Informationen vom Basisstationssystem BSS erhält, der Frequency Correction Channel FCCH und der Synchronization Channel SCH. Zu den Common Control Channels gehört der Random Access Channel RACH. Die zur Realisierung dieser logischen Kanäle übertragenen Funkblöcke oder Signalfolgen können dabei für unterschiedliche Zwecke Signalfolgen K(i) sog. Korrelationsfolgen enthalten, bzw. auf diesen logischen Kanälen können für unterschiedliche Zwecke Signalfolgen K(i) übertragen werden.

Im folgenden wird beispielhaft ein Verfahren zur Synchronisation einer Mobilstation MS mit einer Basisstation BS erläutert: Während eines ersten Schritts der anfänglichen Basisstationssuche oder Zellensuche (initial cell search procedure) verwendet die Mobilstation den primären Synchronisationskanal (primary synchronisation channel SCH (PSC)), um eine Zeitschlitzsynchronisation mit der stärksten Basisstation zu erreichen. Dies kann durch einen angepaßten Filter (matched filter) oder eine entsprechende Schaltung gewährleistet werden, der an den primären Synchronisationscode cp, der von allen Basisstationen ausgesendet wird, angepaßt ist. Dabei wird von allen Basisstationen BS der gleiche primäre Synchronisationscode cp der Länge 256 ausgesendet.

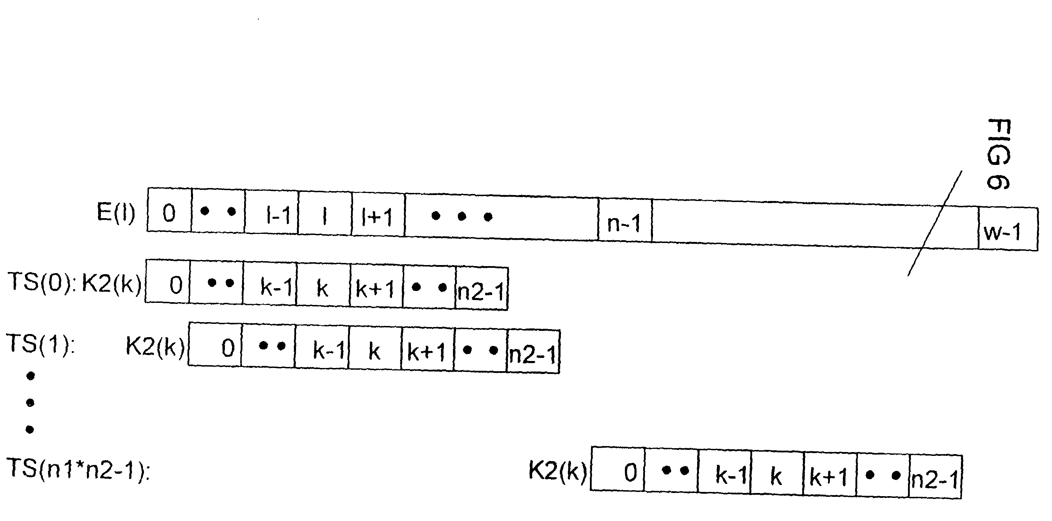

Die Mobilstation ermittelt mittels Korrelation aus einer Empfangsfolge die empfangenen Signalfolgen K(i) nach einem Prinzip, das in den Figuren 6 bis 11 und zugehöriger Beschreibung erläutert ist. Dabei werden am Ausgang eines angepaßten Filters (matched Filter) für jede empfangene Signalfolge jeder sich innerhalb des Empfangsbereichs der Mobilstation befindlichen Basisstation Peaks ausgegeben. Die Detektion der Position des stärksten Peaks ermöglicht die Ermittlung des Timings der stärksten Basisstation modulo der Schlitzlänge. Um eine größere Verläßlichkeit zu gewährleisten, kann der Ausgang des angepaßten Filters über die Anzahl der Zeitschlitze nicht-kohärent akkumuliert werden. Die Mobilstation führt also eine Korrelation über eine signalfolge der Länge 256 Chips als Matched-Filter-Operation durch.

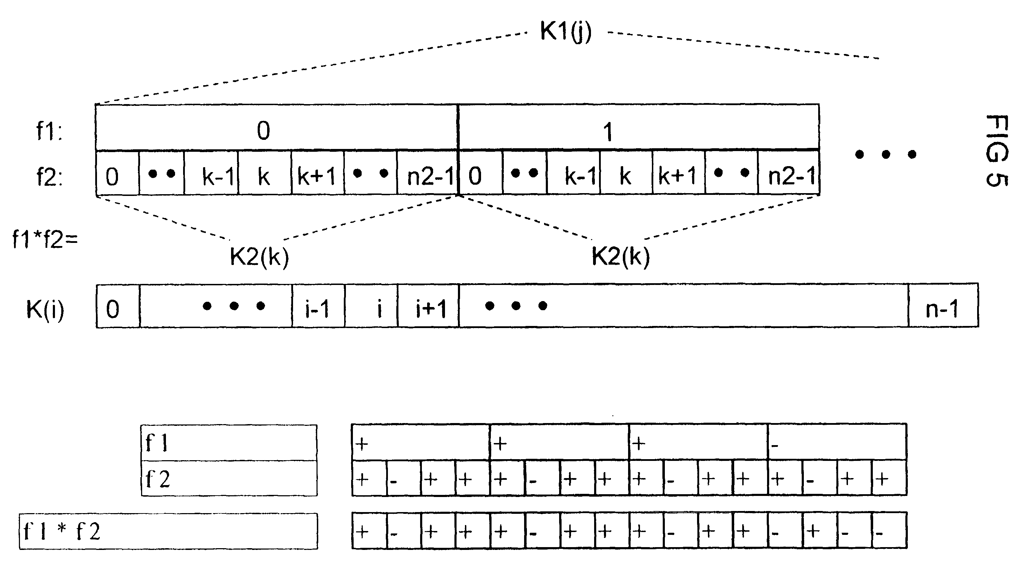

Der Synchronisationscode cp ist dabei entsprechend einer Signalfolge K(i) nach einem Prinzip, wie in Figur 5 und zugehöriger Beschreibung erläutert, gebildet oder kann derart gebildet sein oder ist derart erhältlich. Die Signalfolge K(i) bzw. der Synchronisationscode cp der Länge 256 ist dabei aus zwei Signalteilfolgen K1(j),K2(k), die jeweils die Länge 16 aufweisen, gebildet oder kann derart gebildet werden. Diese Signalteilfolgen bilden dabei ein Signalteilfolgenpaar (K1(j);K2(k)).

Eine derart erhältliche Signalfolge K(i) kann dabei auch "hierarchische Signalfolge" oder "hierarchische Korrelationsfolge" genannt werden. Eine Signalteilfolge kann auch "kurze Korrelationsfolge" oder "konstituierende Folge" genannt werden.

Zumindest eine Signalteilfolge ist dabei eine Golaysequenz, auch Golay Complementary Sequence genannt, der Länge nx, hier *mit $X = X_{NX}(k)$* bezeichnet. X ist durch folgende Beziehung bildbar:

$$X_0\,(k) = \delta(k)$$

$$X'_o(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

$k = 0, 1, 2, ..., 2^{NX}-1$

$n = 1, 2, ..., NX$

$D_n = 2^{P_n}$

mit

$nx = 2^{NX}$

$\delta(k)$ Kroneckersche Deltafunktion

$P_n$, n = 1, 2, ...$NX$: beliebige Permutation der Zahlen {0, 1, 2, ..., $NX$-1}

$W_n$: Gewichte für die Signalteilfolge aus (+1,-1,+i oder -i).

Ein Verfahren von Golay und Sivaswamy zur Generierung von Golayfolgen als solches ist auch aus "Efficient Pulse Compressor for Golay Complementary Sequences", Electronic Letters Vol. 27, No. 3, pp. 219, bekannt.

$W_n$ kann also die Werte +1,-1,+i oder -i annehmen oder insbesondere zur Erzeugung binärer Golaysequenzen die Werte +1 oder -1 annehmen.

Im Rahmen der vorliegenden Anmeldung wird $W_n$ auch als Einheitsgröße bezeichnet. Der für eine Golaysequenz verwendete Satz der Größen $D_n$, der aus der Permutation $P_n$ berechnet werden kann, wird auch als Delaymatrix bezeichnet; der Satz der gewählten Gewichte $W_n$ wird auch als Gewichtsmatrix bezeichnet.

Beispielsweise kann man für die Einheitsgröße bzw. die Gewichte die Gewichtsmatrix W = [1,-1,1,1] wählen, was bedeutet $W_1$ = 1; $W_2$ = -1; $W_3$ = 1; $W_4$ = 1, und für die Delaymatrix D = [8,4,1,2], was bedeutet $D_1$=8=2^3=2^P1; $D_2$=4=2^2=2^P2; $D_3$=1=2^0=2^P3; $D_4$=2=2^1=2^P4. Mit der Permutation bzw. Permutationsmatrix P=[3;2;0;1] ergibt sich die Signalteilfolge $X_4$ = (1 1 1 -1 ~1 1 -1 -1 1 1 1 -1 1 -1 1 1) . Diese Folge kann als eine der Signalteilfolgen, wie beispielsweise K1(j), verwendet werden.

Die Autokorrelationsfunktion einer durch zwei Signalteilfolgen gebildeten Signalfolge K(i) hat im Gegensatz zu einem in herkömmlichen Verfahren verwendeten orthogonalen Gold-Code im allgemeinen schlechtere Autokorrelationseigenschaften. Sie weist beispielsweise höhere Nebenmaxima und einen höheren Effektivwert der Nebenminima auf. Außerdem zeigen UMTS-Link-Level-Simulationen, daß bei Verwendung derartiger Signalfolgen K(i) im PSC zur Slotsynchronisation bei einem Frequenzversatz (Frequenzfehler) zwischen Sender und Empfänger der Synchronisationsfehler im Gegensatz zur Verwendung eines orthogonalen Gold-Codes im allgemeinen höher ist.

Durch aufwendige eigens für diesen Zweck geschaffene Simulationswerkzeuge konnten jedoch aus zumindest einer Golaysequenz bestehende Signalteilfolgenpaare (K1(j);K2(k)) ermittelt werden, auf deren Basis, wie oben erläutert, Signalfolgen K(i) gebildet werden können oder bildbar sind, die insbesondere zur Synchronisation zwischen Basisstation und Mobilstation auch bei einem höheren Frequenzversatz zwischen Sender und Empfänger zuverlässig ermittelt werden können und so zu einem geringen Synchronisationsfehler führen. Dabei wurde bei den Simulationen für das UMTS-System auch von einem Frequenzversatz von 10kHz ausgegangen. Durch die Verwendung einer bzw. eines derart gebildeten oder bildbaren Signalfolge K(i) bzw. Synchronisationscodes cp wird der Berechnungsaufwand zur Berechnung der Korrelationssummen, also zur Ermittlung der Signalfolge K(i) in der empfangenden Mobilstation MS zum Zwecke der Synchronisation, erheblich verringert ohne eine gleichzeitige Erhöhung des Synchronisationsfehlers in Kauf nehmen zu müssen. Außerdem kann auf den Einsatz teurer Quarze im Empfänger zur Frequenzstabilisierung verzichtet werden.

Die Berechnung der Autokorrelationsfunktion in Abhängigkeit von dem Frequenzfehler stellte sich bei den Simulationen als besonders geeignet zur Beurteilung der Synchronisationseigenschaften einer durch ein Permutation-Einheitsgrößen-Paar gebildete Signalfolge K(i) heraus.

Die Berechnung der Autokorrelationsfunktion unter Berücksichtigung eines Frequenzversatzes zwischen Sende- und Empfangseinheit kann dabei auch gemäß folgender Formel durchgeführt werden:

$$a(\kappa) = ABS\left( \sum_{i=0}^{n-1-\kappa} K(i) \bullet [K(i+\kappa) \bullet \exp(j \bullet 2\pi \bullet f_d \bullet i \bullet t_a))] \right)^*$$

κ    Versatz
n    Länge der Folge
i    Index
$f_d$    Frequenzversatz
$t_a$    Abtastintervall
[]*    bedeutet konjugiert komplex

Dabei können die Werte a(κ) für κ=0..n-1 berechnet werden. Ergeben sich mehrere Signalteilfolgenpaare, die ein gleich gutes Verhältnis von Hauptmaximum zum maximalen Nebenmaximum in der Autokorrelationsfunktion der resultierenden Signalfolge K(i) zur Folge haben, so können im weiteren die Signalteilfolgenpaare, die einen geringeren Effektivwert der Nebenminima zur Folge haben, ausgewählt werden. Dabei soll das Verhältnis von Hauptmaximum zum maximalen Nebenmaximum möglichst groß sein und der Effektivwert der Nebenminima möglichst klein. Durch anschließende Link-Level-Simulationen für beispielsweise das UMTS System können Signalteilfolgenpaare ermittelt werden, die sich bei Frequenzfehler 0 kHz und 5 KHz und 10 kHz hinsichtlich des Synchronisationsfehlers überraschenderweise ähnlich gut verhalten, wie ein herkömmlicher orthogonaler Gold-Code, der nichthierarchisch aufgebaut ist, und für die Synchronisation bekanntermaßen sehr gute Eigenschaften aufweist.
Zur Auswahl von Signalteilfolgenpaare (K1(j);K2(k)) können neben der Autokorrelationsfunktion auch folgende Kriterien herangezogen werden:

-    Missed Detektion Rate: Wähle die Signalteilfolgenpaare aus durch Vergleich der Missed Detektion Rate bei Durchführung vollständiger Simulationen.

-    Detektionswahrscheinlichkeiten bei gegebenem Frequenzfehler und gegebenem SNR bei AWGN Kanälen.

Durch die aufwendigen Simulationen konnte eine Menge von Golaysequenzen der Länge 16, beschrieben durch eine Menge von Permutation-Einheitsgrößen-Paaren, die in einem und/oder mehreren der Ansprüche 1, 2, 3 oder 4 angegeben ist, ermittelt werden, auf deren Basis Signalfolgen K(i) bildbar sind, die sowohl bei Frequenzversatz null zwischen Sender und Empfänger als auch bei einem größeren Frequenzversatz beim Einsatz für Synchronisationszwecke einen kleinen Synchronisationsfehler aufweisen. Daraus folgt eine bevorzugte Wahl von Permutation-Einheitsgrößen-Paaren, aus denen Signalteilfolgen und schließlich Signalfolgen K(i) erhältlich oder bildbar sind.
Bei einer Ausführungsvariante der Erfindung ist zumindest eine Signalteilfolge eine hinsichtlich der Nebenmaxima der Autokorrelationsfunktion auch bei Frequenzfehlern optimierte Golaysequenz, insbesondere der Länge 16.
Als vorteilhaft erwies sich bei oben erläuterten Simulationen die Verwendung einer Signalfolge K(i), die auf einer Signalteilfolge basiert, wobei die zur Bildung der Signalteilfolge verwendete Permutation $P_1$, $P_2$, $P_3$, $P_4$ und komplexe Einheitsgröße $W_1$, $W_2$, $W_3$, $W_4$ folgender Menge von Permutation-Einheitsgrößen-Paaren ($P_1$ $P_2$ $P_3$ $P_4$ , $W_1$ $W_2$ $W_3$ $W_4$ ;) entnommen ist:
0213,+j+j+j-1;  0213,-j+j+j-1;  0213,+1-j+j-1;  0213,-1-j+j-1;  0213,+1+j-j-1;  0213,-1+j-j-1;  0213,+j-j-j-1;  0213,-j-j-j-1;
0213,+j+j+j+1;  0213,-j+j+j+1;  0213,+1-j+j+1;  0213,-1-j+j+1;  0213,+1+j-j+1;  0213,-1+j-j+1;  0213,+j-j-j+1;  0213,-j-j-j+1;
3120,+1-j+j-1;  3120,-1-j+j-1;  3120,+1+j-j-1;  3120,-1+j-j-1;  3120,+1+j+j+j;  3120,-1+j+j+j;  3120,+1-j-j+j;  3120,-1-j+j+j;
3120,+1+j-j-j;  3120,-1+j-j-j;  3120,+1-j-j-j;  3120,-1-j-j-j;  3120,+1-j+j+1;  3120,-1-j+j+1;  3120,+1+j-j+1;  3120,-1+j-j+1;.
Als besonders vorteilhaft erwies sich bei oben erläuterten Simulationen die Verwendung einer Signalfolge K(i), die auf einer Signalteilfolge basiert, wobei die zur Bildung der Signalteilfolge verwendete Permutation P), $P_2$, $P_3$, $P_4$ und binäre Einheitsgröße $W_1$, $W_2$, $W_3$, $W_4$ folgender Menge von Permutation-Einheitsgrößen-Paaren ($P_1$ $P_2$ $P_3$ $P_4$ , $W_1$ $W_2$ $W_3$ $W_4$ ;) entnommen ist:
3201, +1-1+1+1; 3201, -1+1+1+1; 3201, +1-1+1+1; 3201, -1-1-1+1; 3201, +1-1+1-1; 3201; -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1;.
Als besonders vorteilhaft erwies sich bei oben erläuterten Simulationen auch die Verwendung einer Signalfolge K(i), die auf einer Signalteilfolge basiert, wobei die zur Bildung der Signalteilfolge verwendete Permutation $P_1$, $P_2$, $P_3$, $P_4$ und binäre Einheitsgröße $W_1$, $W_2$, $W_3$, $W_4$ folgender Menge von Permutation-Einheitsgrößen-Paaren ($P_1$ $P_2$ $P_3$ $P_4$ , $W_1$ $W_2$ $W_3$ $W_4$ ;) entnommen ist:
3201, +1-1+1+1; 3201, -1-1-1+1; 3201, -1+1-1-1; 3201, +1-1-1-1;, und die zur Bildung der zweiten Signalteilfolge verwendete Permutation ($P_1$ $P_2$ $P_3$ $P_4$ ) gleich 3201 ist.
Neben der Permutation-Einheitsgrößendarstellung kann man - wie oben schon erläutert - die Golayfolgen auch durch Angabe der Delay-Matrix und der Gewichtsmatrix darstellen. Die oben an erster Stelle als besonders vorteilhaft angegebene Folge mit reellen Gewichten, die durch die Parameter ($P_1$ $P_2$ $P_3$ $P_4$ , $W_1$ $W_2$ $W_3$ $W_4$ ) angegebene Folge (3201,+1-1+1+1) ist somit definiert durch die Delay-Matrix D = [8, 4, 1,2] und die Gewichts-Matrix W = [1, -1, 1,1].

Des weiteren kann man die Golayfolge auch explizit durch Angabe der einzelnen Elemente darstellen, für die oben genannte Golayfolge der Länge 16 ergibt sich dabei:

K1= <+1,+1,+1,-1,-1,+1,-1,-1,+1,+1,+1,-1,+1,-1,+1,+1>

Eine weitere äquivalente Darstellung ergibt sich bei dem in der Literatur häufig verwendeten Mapping von +1 auf 0 und -1 auf 1. Die Folge ist dann definiert durch:

<0,0,0,1,1,0,1,1,0,0,0,1,0,1,0,0>

Verwendet man als Signalteilfolgen (konstituierende Sequenzen) für den PSC von UMTS also Golaysequenzen der Länge 16, wobei man als Gewichte $W_n$=1,-1, i -i und als Verzögerungen eine beliebige Permutation aus $D_n$= {1,2,4,8} zuläßt, so gibt es mehr als $2^{12}$ verschiedene Möglichkeiten für jede der beiden konstituierenden Sequenzen, also insgesamt mehr als $2^{24}$ Möglichkeiten. Im Rahmen der Erfindung liegen gemäß den Patentansprüchen 1, 2, 3 oder 4 ungefähr 10 bis 10^2 Permutation-Einheitsgrößen-Paare. Die ausgewählten Permutation-Einheitsgrößen-Paare bilden also nur eine sehr kleine Teilmenge der grundsätzlich möglichen Menge von zur Bildung von 16-stelligen Golaysequenzen verwendbaren Permutation-Einheitsgrößen-Paaren.

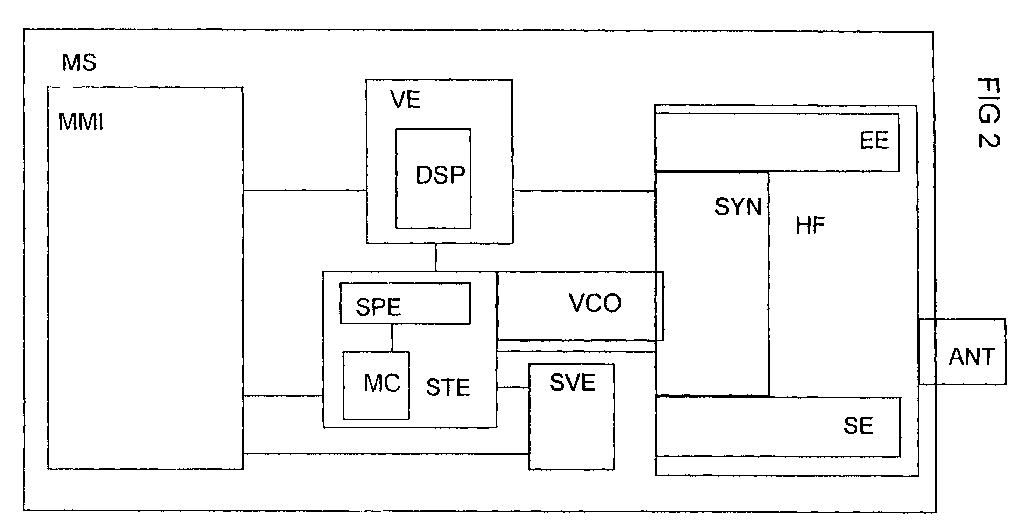

Figur 2 zeigt eine Funkstation, die eine Mobilstation MS sein kann, bestehend aus einer Bedieneinheit oder Interface-Einheit MMI, einer Steuereinrichtung STE, einer Verarbeitungseinrichtung VE, einer Stromversorgungseinrichtung SVE, einer Empfangseinrichtung EE und ggf. einer Sendeeinrichtung SE.

Die Steuereinrichtung STE besteht im wesentlichen aus einem programmgesteuerten Mikrocontroler MC, der schreibend und lesend auf Speicherbausteine SPE zugreifen kann. Der Microcontroler MC steuert und kontrolliert alle wesentlichen Elemente und Funktionen der Funkstation.

Die Verarbeitungseinrichtung VE kann auch durch einen digitalen Signalprozessor DSP gebildet sein, der ebenfalls auf Speicherbausteine SPE zugreifen kann. Durch die Verarbeitungseinrichtung VE können auch Additions- und Multiplikationsmittel realisiert sein.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden und während der Verarbeitung von Signalen entstehende Informationen gespeichert. Außerdem können darin Signalfolgen K(i), die zu Korrelationszwecken verwendet werden, und Zwischenergebnisse von Korrelationssummenberechnungen gespeichert werden. Die im Rahmen der Erfindung liegenden Signalfolgen K(i) können also in der Mobilstation und/oder der Basisstation abgespeichert sein. Es ist auch möglich, daß ein oder mehrere der oben aufgeführten Permutation-Einheitsgrößen-Paare oder daraus abgeleitete Signalteilfolgen oder Signalteilfolgenpaare (K1(j);K2(k)) in der Mobilstation und/oder der Basisstation abgespeichert sind. Es ist auch möglich, daß in der Mobilstation und/oder der Basisstation eine Signalfolge K(i) aus einem Signalteilfolgenpaar (K1(j);K2(k)) und/oder eine Signalteilfolge aus einem Permutation-Einheitsgrößen-Paaren gebildet wird.

Insbesondere kann in einer Basisstation oder in allen Basisstationen eines Systems eine Signalfolge K(i) abgespeichert sein, die in festen oder variablen Abständen zu Synchronisationszwecken ausgesendet wird. In der Mobilstation MS ist das Signalteilfolgenpaar (K1(j);K2(k)), aus dem die in der Basisstation abgespeicherte Signalfolge K(i) bildbar ist oder gebildet werden kann, abgespeichert und wird zur Synchronisation der Mobilstation mit einer Basisstation zur rechenaufwandsgünstigen Korrelationssummenberechnung herangezogen.

Die Speicherung der Signalfolgen bzw. der Signalteilfolgen kann auch durch eine Speicherung entsprechender Informationen in beliebig codierter Form erfolgen und durch Mittel zur Speicherung, wie beispielsweise flüchtige und/oder nichtflüchtige Speichereinbausteine oder durch entsprechend konfigurierte Addierer- oder Multiplizierereingänge oder entsprechende gleichwirkende Hardwareausgestaltungen realisiert sein.

Der Hochfrequenzteil HF besteht ggf. aus der Sendeeinrichtung SE, mit einem Modulator und einem Verstärker V und einer Empfangseinrichtung EE mit einem Demodulator und ebenfalls einem Verstärker. Durch Analog/Digitalwandlung werden die analogen Audiosignale und die analogen von der Empfangseinrichtung EE stammenden Signale in digitale Signale gewandelt und vom digitalen Signalprozessor DSP verarbeitet. Nach der Verarbeitung werden ggf. die digitalen Signale durch Digital/Analogwandlung in analoge Audiosignale oder andere Ausgangssignale und analoge der Sendeeinrichtung SE zuzuführende Signale gewandelt. Dazu wird gegebenfalls eine Modulation bzw. Demodulation durchgeführt.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszillators VCO kann auch der Systemtakt zur Taktung von Prozessoreinrichtungen der Funkstation erzeugt werden.

Zum Empfang und zum Senden von Signalen über die Luftschnittstelle eines Mobilfunksystems ist eine Antenneneinrichtung ANT vorgesehen. Bei einigen bekannten Mobilfunksystemen, wie dem GSM (Global System for Mobile Communication) werden die Signale zeitlich gepulst in sogenannten bursts empfangen und gesendet.

Bei der Funkstation kann es sich auch um eine Basisstation BS handeln. In diesem Fall wird das Lautsprecherelement und das Mikrophonelement der Bedieneinheit MMI durch eine Verbindung zu einem Mobilfunknetz, beispielsweise über einen Basisstationscontroler BSC bzw. eine Vermittlungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtungen.

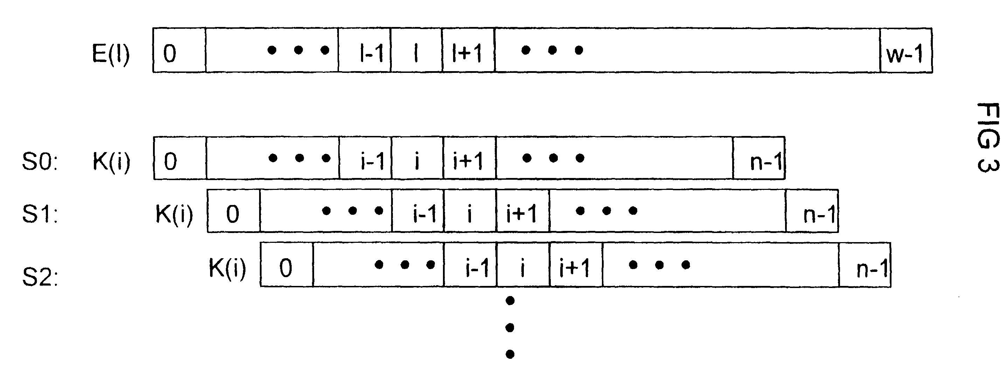

In Figur 3 ist eine Empfangssignalfolge E(1), bei der es sich auch um ein von einem Empfangssignal abgeleitete Signalfolge handeln kann, der Länge w dargestellt. Zur Berechnung einer ersten Korrelationssumme S0 entsprechend eingangs angegebener Formel werden Elemente eines ersten Abschnitts dieser Empfangssignalfolge E(l) paarweise mit den entsprechenden Elementen der Signalfolge K(i) der Länge n multipliziert, und die Länge der resultierenden Teilergebnisse zur Korrelationssumme S0 aufaddiert.

Zur Berechnung einer weiteren Korrelationssumme S1 wird die Signalfolge K(i) wie in der Figur bildlich dargestellt um ein Element nach rechts verschoben und die Elemente der Signalfolge K(i) mit den entsprechenden Elementen der Signalfolge E(1) paarweise multipliziert, und durch eine Summation der entstehenden Teilergebnisse wieder die Korrelationssumme S1 gebildet.

Die paarweise Multiplikation der Elemente der Signalfolge mit entsprechenden Elementen der Empfangssignalfolge und die anschließende Summation kann auch in Vektorschreibweise als die Bildung eines Skalarproduktes beschrieben werden, sofern man jeweils die Elemente der Signalfolge und die Elemente der Empfangssignalfolge zu einem Vektor eines kartesischen Koordinatensystems zusammenfaßt:

$$S0 = \begin{pmatrix} K(0) \\ \vdots \\ K(i) \\ \vdots \\ K(n-1) \end{pmatrix} * \begin{pmatrix} E(0) \\ \vdots \\ E(i) \\ \vdots \\ E(n-1) \end{pmatrix} = K(0) * E(0) + \ldots + K(i) * E(i) + \ldots + K(n-1) * E(n-1)$$

$$S1 = \begin{pmatrix} K(0) \\ \vdots \\ K(i) \\ \vdots \\ K(n-1) \end{pmatrix} * \begin{pmatrix} E(1) \\ \vdots \\ E(i+1) \\ \vdots \\ E(n) \end{pmatrix} = K(0) * E(1) + \ldots + K(i) * E(i+1) + \ldots + K(n-1) * E(n)$$

In den so ermittelten Korrelationssummen S kann das Maximum gesucht werden, das Maximum der Korrelationssummen S mit einem vorgegebenen Schwellwert verglichen werden, und so ermittelt werden, ob in dem Empfangssignal E(1) die vorgegebene Signalfolge K(i) enthalten ist und wenn ja, wo im Empfangssignal E(1) sie sich befindet, und so zwei Funkstationen miteinander synchronisiert werden bzw. Daten, denen ein individueller Spreizcode in Form einer Signalfolge K(i) aufmoduliert wurde, detektiert werden.

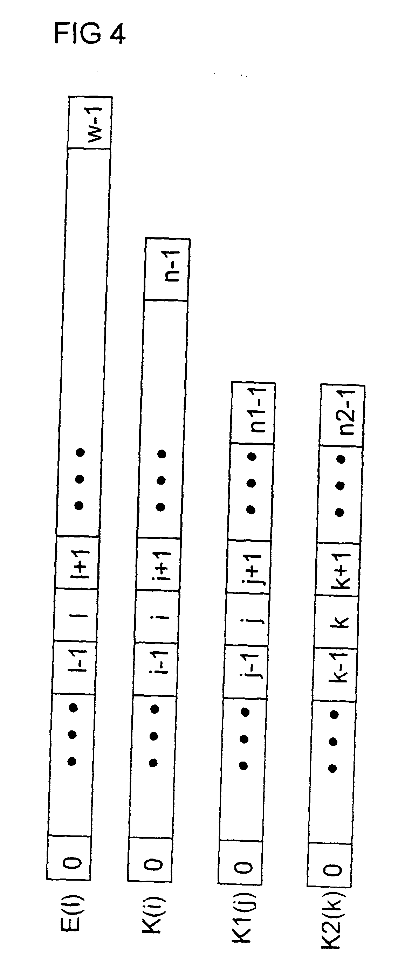

In Figur 4 ist wieder die Empfangssignalfolge E(1)und als Korrelationsfolge eine Signalfolge K(i), die auf den Signalteilfolgen K1(j), K2(k) basiert, dargestellt.

In Figur 5 ist die Bildung einer Signalfolge K(i) dargestellt, die auf zwei Signalteilfolgen K2(k) der Länge n2 und K1(j) der Länge n1 basiert. Dazu wird die Signalteilfolge K2(k) n1 mal wiederholt, und dabei durch die Signalteilfolge K1(j) moduliert. Die Bildung der Signalfolge K(i) läßt sich mathematisch auch durch folgende Formel ausdrücken:

$$K(i) = K2(i \bmod n2) * K1(i \operatorname{div} n2), \text{ für } i = 0 \ldots n1 * n2 - 1$$

Dabei bezeichnet mod den ganzzahligen Rest einer Division und div das ganzzahlige Ergebnis einer Division.

Dies ist bildlich dargestellt durch eine Folge f2, die aus den wiederholten, nacheinander abgebildeten Signalteilfolgen K2(k) besteht, und eine Folge f1, die durch eine gedehnte Signalteilfolge K1(j) über der Folge f2 abgebildet ist.

Durch eine Multiplikation der Elemente der Folge f2 mit den entsprechenden über der Folge f2 abgebildeten Elementen der Folge f1 entsteht die neue Signalfolge K(i) der Länge n. Diese Erzeugung einer Signalfolge K(i) ist unten im Bild noch einmal anhand eines Beispiels zweier binärer Signalteilfolgen der Länge 4 dargestellt.

Natürlich ist die Erfindung nicht auf Signalteilfolgen der Länge 4 bzw. Signalfolgen der Länge 16 beschränkt. Auch ist die Erfindung nicht auf die oben verwendete mathematische Beschreibung beschränkt.

Beispielsweise entspricht inhaltlich folgende Darstellung für Signalteilfolgen der Länge 16 bzw. Signalfolgen der Länge 256 der oben verwendeten mathematischen Darstellung und ist daher ebenfalls in der Erfindung enthalten:

Verwendet man für K1 beispielhaft die oben als besonders günstig beschriebene Golayfolge mit der Permutation-Einheitsgrößendarstellung (3201 , +1-1+1+1) oder der expliziten Darstellung <+1,+1,+1,-1,-1,+1,-1,-1,+1,+1,+1,-1,+1,-1,+1,+1> und für K2 eine aus 16 Elementen bestehende Folge a, so kann man die wiederholten, nacheinander abgebildeten Signalteilfolgen K2 bzw. a, welche mit dem Wert des jeweiligen Elementes der Folge K1 moduliert werden, auch folgendermaßen schreiben:

K = <a, a, a, -a, -a, a, -a, -a, a, a, a, -a, a, -a, a, a>

Derart gebildete Signalfolgen K(i) können zur vereinfachten Berechnung von Korrelationssummen dieser Signalfolgen K(i) mit Empfangssignalfolgen E(1) genutzt werden. Die so gebildete Signalfolge der Länge 256 kann beispielsweise zu Synchronisationszwecken als primärer Synchronisationscode cp der Länge 256 ausgesendet werden.

Eine schematische Darstellung einer derartigen vereinfachten und somit auch schnelleren und aufwandgünstigeren Berechnung von Korrelationssummen S ist in den Figuren 6 bis 8 dargestellt, auf die im folgenden eingegangen wird.

Zunächst wird eine Teilkorrelationssumme TS(z) gebildet. Dazu wird beispielsweise für das erste Element der Teilkorrelationssummenfolge TS(0) die Korrelationssumme der zweiten Signalteilfolge K2(k) mit dem entsprechenden Abschnitt der Empfangssignalfolge E(l) gebildet.

$$TS(0) = \begin{pmatrix} K2(0) \\ \vdots \\ K2(k) \\ \vdots \\ K2(n2-1) \end{pmatrix} * \begin{pmatrix} E(0) \\ \vdots \\ E(k) \\ \vdots \\ E(n2-1) \end{pmatrix} = K2(0)*E(0)+...+K2(k)*E(k)+...+K2(n2-1)*E(n2-1)$$

Für das zweite Element der Teilkorrelationssummenfolge TS(1) wird die zweite Signalteilfolge K2{k} wie bildlich dargestellt um ein Element verschoben und ebenfalls die Korrelationssumme mit dem entsprechenden Element der Empfangssignalfolge E(1) gebildet usw.

$$TS(1) = \begin{pmatrix} K2(0) \\ \vdots \\ K2(k) \\ \vdots \\ K2(n2-1) \end{pmatrix} * \begin{pmatrix} E(1) \\ \vdots \\ E(k+1) \\ \vdots \\ E(n2) \end{pmatrix} = K2(0)*E(1)+...+K2(k)*E(k+1)+...+K2(n2-1)*E(n2)$$

Das n-te Element der Teilkorrelationssummenfolge TS(n1*n2-1) wird nach n-1 Verschiebungen der zweiten Signalteilfolge K2(k) gegenüber der Empfangssignalfolge E(1) entsprechend berechnet.

$$TS(n-1) = \begin{pmatrix} K2(0) \\ \vdots \\ K2(k) \\ \vdots \\ K2(n2-1) \end{pmatrix} * \begin{pmatrix} E(n-1) \\ \vdots \\ E(k+n-1) \\ \vdots \\ E(n2+n-2) \end{pmatrix} \approx$$

$$= K2(0)*E(n-1)+...+K2(k)*E(k+n-1)+...+K2(n2-1)*E(n2+n-2)$$

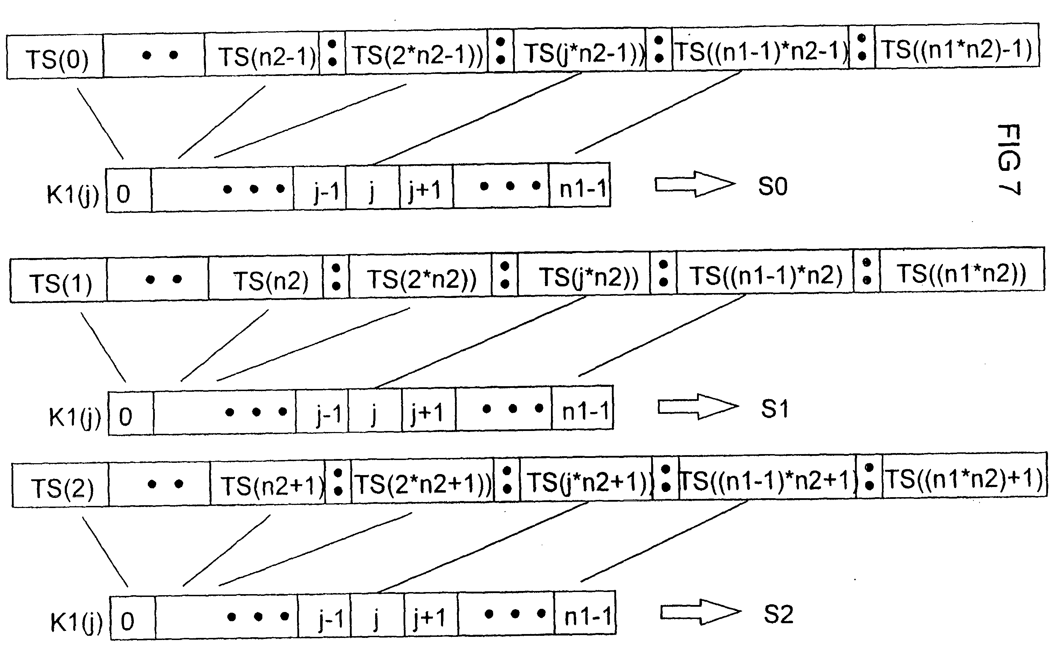

Die so entstehende Teilkorrelationssummenfolge TS(z) ist im oberen Bereich der Figur 7 dargestellt. Aus dieser Teilkorrelationssummenfolge wird nun jedes n2-te-Element ausgewählt und mit dem entsprechenden Element der ersten Signalteilfolge K1(j) paarweise multipliziert.

Faßt man die ausgewählten Elemente der Teilkorrelationssummenfolge TS(z) und die erste Signalteilfolge K1(j) jeweils zu Vektoren zusammen, so wird die erste Korrelationssumme S0 durch das Skalarprodukt dieser beiden Vektoren erzeugt.

$$S0 = \begin{pmatrix} K1(0) \\ \vdots \\ K1(j) \\ \vdots \\ K1(n1-1) \end{pmatrix} * \begin{pmatrix} TS(0) \\ \vdots \\ TS(j*n2-1) \\ \vdots \\ TS((n1-1)*n2-1) \end{pmatrix} = K1(0) * TS(0) + \ldots + K1(j) * TS(j*n2-1) + \ldots$$

Figur 7 zeigt im unteren Bereich die entsprechende Berechnung weiterer Korrelationssummen S1 bzw. S2 durch die Auswahl n2-ter um 1 bzw. 2 rechts von den als erstes ausgewählten Elementen liegenden Elemente:

$$S1 = \begin{pmatrix} K1(0) \\ \vdots \\ K1(j) \\ \vdots \\ K1(n1-1) \end{pmatrix} * \begin{pmatrix} TS(1) \\ \vdots \\ TS(j*n2) \\ \vdots \\ TS((n1-1)*n2) \end{pmatrix} = K1(0) * TS(0) + \ldots + K1(j) * TS(j*n2) + \ldots$$

Durch die Speicherung einmal berechneter Teilkorrelationssummen TS kann auf diese bei der späteren Berechnung von weiteren Korrelationssummen zurückgegriffen werden, und somit auf die entsprechenden Rechenschritte verzichtet werden.

Je nach Ausführungsvariante kann entweder zunächst die komplette Teilkorrelationssummenfolge TS(z) über die ganze Empfangssignalfolge E(1) berechnet werden und dann die einzelnen Korrelationssummen oder erst bei Bedarf zur Berechnung einer neuen Korrelationssumme die entsprechenden zusätzlich benötigten Teilkorrelationssummen berechnet werden.

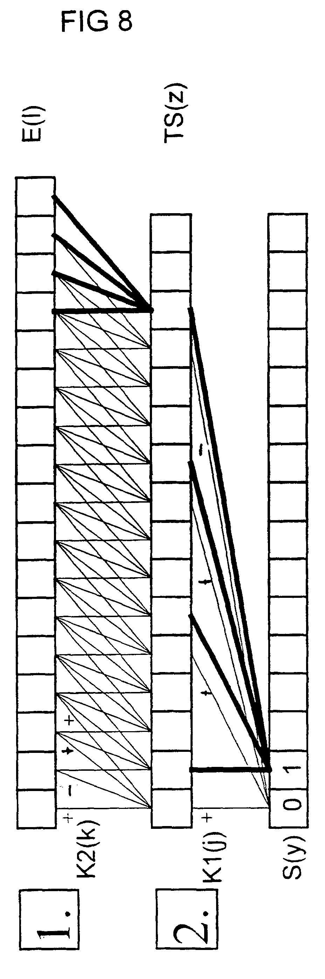

Figur 8 zeigt nochmals das aus zwei Schritten bestehende Verfahren zur Berechnung von Korrelationssummen S, diesmal anhand des in Figur 5 dargestellten Beispiels zweier binärer Signalteilfolgen der Länge 4.

In einem ersten Schritt werden die Teilkorrelationssummen TS(z) der zweiten Signalteilfolge K2(k) +-++ mit entsprechenden Abschnitten der Empfangssignalfolge E(1) berechnet, und dann in einem zweiten Schritt jedes vierte Element der so erzeugten Teilkorrelationssummenfolge TS(z) ausgewählt, mit dem entsprechenden Element der ersten Signalteilfolge K1(j) +++multipliziert und zur Korrelationsfolge S0 aufsummiert.

Die dick gezeichneten Linien stellen dabei die neu durchzuführenden Berechnungsschritte dar für die Berechnung einer weiteren Korrelationssumme S1, für den Fall, daß die übrigen Teilkorrelationssummen TS schon zuvor berechnet und abgespeichert wurden.

Diese Ausführungsvariante kann möglichst speichereffizient durchgeführt werden, wenn zunächst jede n2-te Teilkorrelationssumme berechnet wird. Dazu werden die Abtastwerte zwischengespeichert.

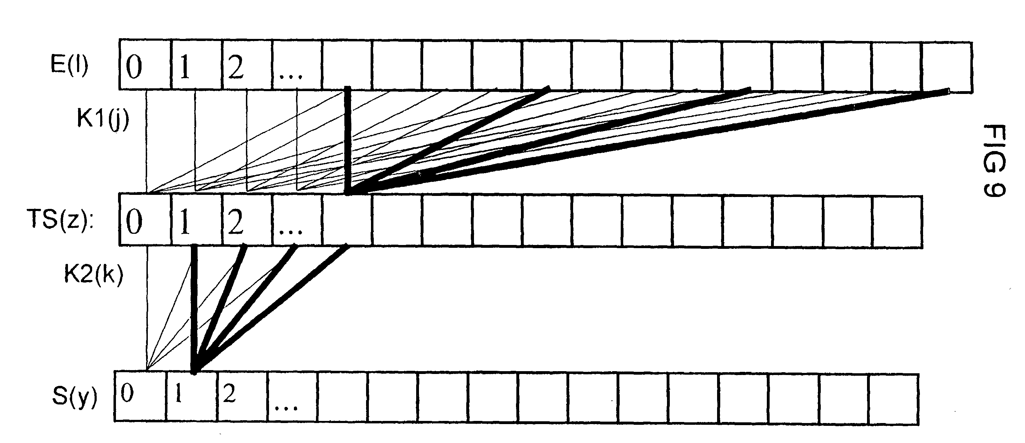

Die Figuren 9 bis 10 stellen eine andere Ausführungsvariante zur vereinfachten Berechnung von Korrelationssummen S anhand des schon oben erwähnten Beispiels zweier binärer Signalteilfolgen der Länge 4 vor.

Dabei wird zunächst jedes 4. Element der Empfangssignalfolge E(1) ausgewählt und die Teilkorrelationssummenfolge TS(z) der so ausgewählten Elemente mit der Signalteilfolge K1 (j) gebildet. Aus der so entstehenden Teilkorrelationssummenfolge TS(z) werden jeweils 4 aufeinander folgende Elemente ausgewählt, paarweise mit entsprechenden Elementen der Signalteilfolge K2(k) multipliziert und die resultierenden Teilergebnisse zur Korrelationssumme S aufsummiert. Dabei stellen wieder die dick gezeichneten Linien die zusätzlich nötigen Schritte zur Berechnung einer weiteren Korrelationssumme S1 dar, für den Fall, daß die anderen Teilkorrelationssummen TS zuvor schon berechnet und abgespeichert wurden.

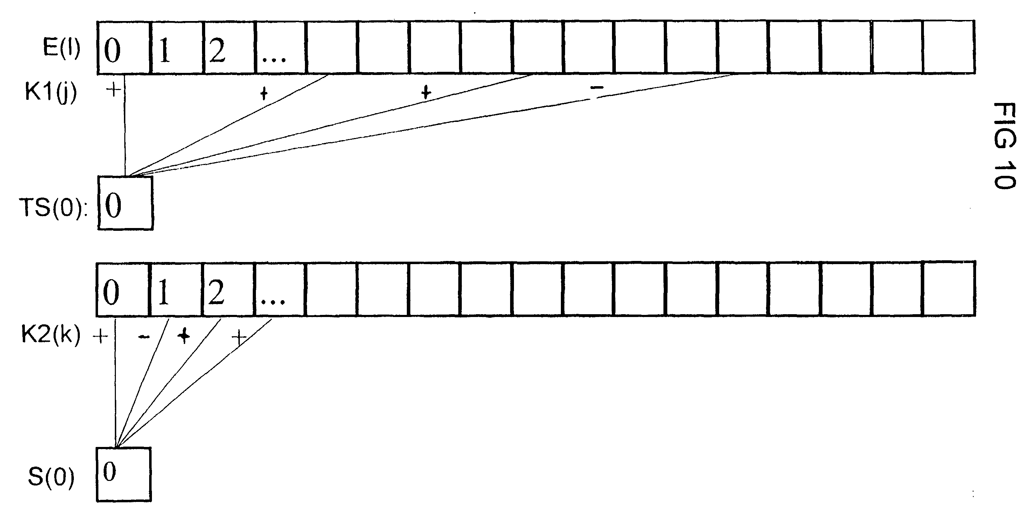

Figur 10 zeigt nochmals die Berechnung einer ersten Korrelationssumme S0 bei der zunächst jedes 4. Element der Empfangssignalfolge E(1) ausgewählt wird, diese Elemente mit entsprechenden Elementen der ersten Signalteilfolge K1(j) +++- multipliziert werden und durch Summation der Teilergebnisse die Teilkorrelationssumme TS(0) berechnet wird. In einem zweiten Schritt werden die ersten vier aufeinander folgenden Elemente der Teilkorrelationssummenfolge TS(z) mit den entsprechenden Elementen der zweiten Signalteilfolge K2(k) +-++ multipliziert und die entstehenden Teilergebnisse zur Korrelationssumme S0 aufsummiert.

Bei dieser Ausführungsvariante wird weniger Speicher zum Zwischenspeichern der Teilkorrelationssummen benötigt, wenn die Summen sukzessive berechnet werden.

Eine weitere Ausgestaltung der Erfindung macht von der durch das regelmäßige Konstruktionsprinzip der Signalfolge K(i) bedingten regelmäßigen (fast periodischen) Struktur der aperiodischen Autokorrelationsfunktion dieser Signalfolge Gebrauch. Dies bedeutet, daß sich bei der Suche eines Signals nicht nur ein Haupt-Maximum ergibt, sondern in regelmäßigen Abständen auch Nebenmaxima auftreten. Zur beschleunigten Suche nach der Signalfolge in der Empfangssignalfolge kann man die Regelmäßigkeit der Lage der Maxima ausnutzen. Sobald ein Nebenmaxima gefunden wurde, kann man aufgrund der Periodizität die Lage der anderen Maxima vorhersagen, d.h. man berechnet die Korrelationssumme lediglich an diesen Stellen. Auf diese Weise kann man schnell das Hauptmaximum detektieren. Allerdings kann es sich bei dem vermeintlichen Nebenmaximum auch nur um einen zufällig (wegen des Rauschanteils) erhöhten Wert handeln. In diesem Fall wird man an den potentiellen Stellen des erwarteten Hauptmaximums tatsächlich kein Maximum finden. Daher wird in diesem Fall die Hypothese verworfen und die Berechnung konventionell fortgesetzt.

Man kann die durch das Konstruktionsprinzip der Signalfolgen bedingte Regelmäßigkeit der Nebenmaxima aber auch zur Eliminierung und Korrektur störender Nebenmaxima im Korrelationsergebnis ausnutzen. Nach der Detektion des Maximums kann man aus dem Maximum die Nebenmaxima berechnen und diesen Wert von den entsprechenden Korrelationsergebnissen subtrahieren. Auf diese Weise erhält man das Korrelationsergebnis einer (hypothetischen) Folge mit perfekter Autokorrelationsfunktion. Dadurch ergibt sich durch die Regelmäßigkeit der Nebenmaxima eine stark vereinfachte Berechnung.

In Ausführungsvarianten der Erfindung werden zur Berechnung von Skalarprodukten, Korrelationssummen und/oder Teilkorrelationssummen Effiziente Golay Korrelatoren verwendet.

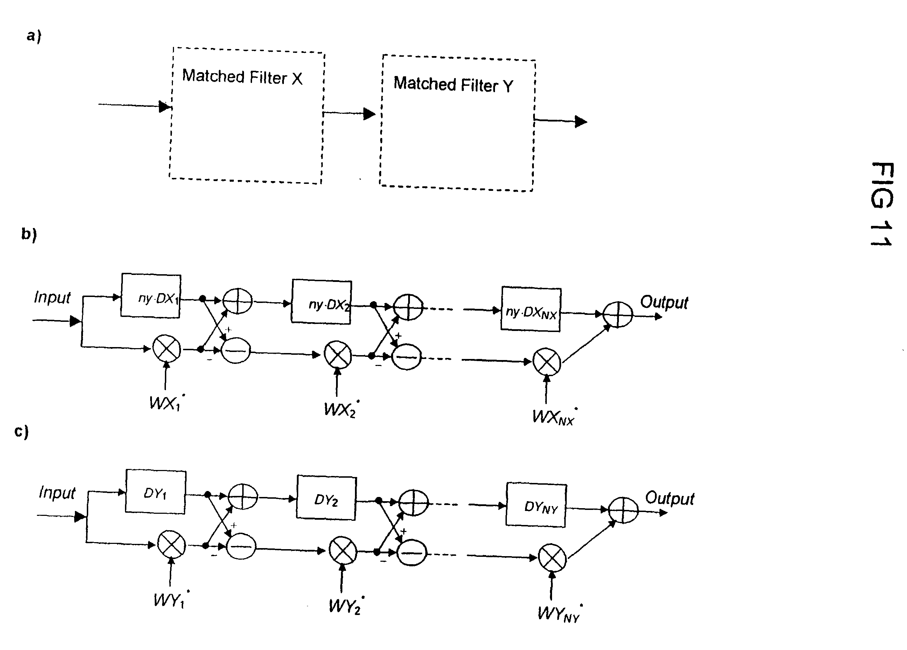

Figur 11 zeigt einen effizienten hierarchischen Korrelator für Signalfolgen, wobei als konstituierende Folgen K1, K2 Golayfolgen X,Y der Länge nx bzw. ny verwendet werden. Der Korrelator besteht aus zwei hintereinander geschalteten Matched Filtern (Figur 11 a), die jeweils als Efficient-Golay-Korrelatoren gebildet sind. Figur 11 b) zeigt den Matched Filter für die Folge X und Figur 11 c) zeigt den Matched Filter für die Folge Y.

In Figur 11 b) gelten folgende Bezeichnungen:

n = 1, 2, ...*NX*
ny    Länge der Folge Y
nx    Länge der Folge X
NX    mit nx=$2^{NX}$
$DX_n$    $DX_n = 2^{PX_n}$
$PX_n$    Permutation der Zahlen (0, 1, 2, ..., *NX*-1} für die Signalteilfolge X
$WX_n$    Gewichte für die Signalteilfolge X aus (+1,-1,+i oder -i).

In Figur 11 c) gelten folgende Bezeichnungen:

n = 1, 2; ...*NY*

ny    Länge der Folge Y
NY    mit ny=$2^{NY}$
$DY_n$    $DY_n = 2^{PY_n}$
$PY_n$    Permutation der Zahlen {0, 1, 2, ..., *NY*-1} für die Signalteilfolge Y
$WY_n$    Gewichte für die Signalteilfolge Y aus (+1,-1,+i oder -i).

Außerdem gelten in diesen Ausführungsvarianten folgende Definitionen und Bezeichnungen:

$a_n(k)$ und $b_n(k)$ sind zwei komplexe Folgen der Länge $2^N$,
$\delta(k)$ ist die Kronecker Delta-Funktion,
$k$ ist eine die Zeit repräsentierende ganze Zahl,
$n$ ist die Iterationsnummer,
$D_n$ ist die Verzögerung,
$P_n$ , $n$ = 1, 2, ..., $N$, ist eine beliebige Permutation der Zahlen {0, 1, 2, ..., $N$-1},
$W_n$ können als Gewichte die Werte +1, -1, +i, -i annehmen und wird auch als Einheitsgröße bezeichnet.

Die Korrelation einer Golaysequenz der länge $2^N$ kann nun folgendermaßen effizient durchgeführt werden:

Man definiert die Folgen $R_a^{(0)}(k)$ und $R_b^{(0)}(k)$ als $R_a^{(0)}(k) = R_b^{(0)}(k) = r(k)$, wobei r (k) das Empfangssignal oder die Ausgabe einer anderen Korrelationsstufe ist.

Folgender Schritt wird N mal ausgeführt; n läuft von 1 bis N:

Berechne

$$R_a^{(n)}(k) = W^*_n * R_b^{(n-1)}(k) + R_a^{(n-1)}(k - D_n)$$

Und

$$R_b^{(n)}(k) = W^*_n * R_b^{(n-1)}(k) - R_a^{(n-1)}(k - D_n),$$

wobei $W^*_n$ das konjugiert komplexe von $W_n$ bezeichnet. Falls die Gewichte W reell sind, ist $W^*_n$ identisch zu $W_n$. $R_a^{(N)}(k)$ ist dann die zu berechnende Korrelationssumme.

Ein Efficient Golay Korrelator für einen PSC Code der Länge 256 ($2^8$) Chips im Empfänger weist in der Regel $2*\cdot 8 - 1 = 15$ komplexe Addierer auf. Mit der Kombination aus Hierarchischer Korrelation und Efficient Golay Korrelator sind für einen Hierarchischen Code - beschrieben durch zwei konstituierende Sequenzen X und Y - der Länge 256 ($2^4\cdot2^4$) nur 2.4-1+2.4-1 = 14 komplexe Addierer erforderlich (auch wenn vierwertige konstituierende Folgen einsetzt werden). Damit wird der Berechnungsaufwand, der für die primäre Synchronistation in CDMA-Mobilfunksystemen sehr hoch ist, um 7% reduziert.

Im folgenden werden - jeweils durch Gliederungsstriche gekennzeichnet - Ausführungsvarianten der Erfindung angegeben, deren Realisierung bei Kenntnis der vorliegenden Anmeldung im Rahmen fachmännischen Handelns liegen:

- zur Bildung einer Codefolge der Länge $2^{NX+NY}$ werden zwei konstituierende Golaysequenzen der Länge nx=$2^{NX}$ und ny=$2^{NY}$ verwendet und wie oben beschrieben hierarchisch aufgebaut.

- als Gewichte für die konstituierenden Golaysequenzen werden +1 und -1 verwendet und somit binäre Sequenzen erzeugt.

- als Gewichte für die konstituierenden Golaysequenzen werden +1,-1,i oder -i verwendet und somit 4-wertige Sequenzen erzeugt.

- es werden reele Golaysequenzen verwendet.

- es werden komplexe Golaysequenzen verwendet.

- es werden zwei konstituierende Golaysequenzen gleicher Länge verwendet.

- es werden zwei komplementäre Golaysequenzen verwendet.

- es wird nur ein Efficient-Golay-Korrelator, ggf. mit programmierbaren Delays zur wahlweisen Berechnung von einer oder beiden komplementären Golaysequenzen verwendet.

- es wird eine Folge wie beschrieben verwendet, aber noch zusätzlich Werte eingefügt; bei der Berechnung müssen diese Werte wie gewohnt akkumuliert werden. Der Rest der Berechnung kann aber wie beschrieben effizient durchgeführt werden. Dies erlaubt die Generierung von Folgen beliebiger Länge.

- es werden zwei konstituierende Teilfolgen verwendet.

- es werden mehrere konstituierende Teilfolgen verwendet.

- es wird nur für einen Teil der Teilfolgen eine Golay-Folge verwendet.

- es werden diese Folgen für den Synchronisationskanal in UMTS verwendet.

- es werden auf Frequenzfehler optimierte konstituierende Golaysequenzen verwendet.

- es werden zur Berechnung der Korrelation zwei hintereinander geschaltete Filter verwendet, wobei das eine ein Matched Filter auf die Golaysequenz X und das andere ein Matched Filter auf die Golaysequenz Y mit gespreizten Delays ny·DX$_n$ ist.

- es werden zur Berechnung der Korrelation zwei hintereinander geschaltete Filter verwendet, wobei das eine ein Matched Filter auf die Golaysequenz X und das andere ein Matched Filter auf die Golaysequenz Y mit gespreizten Delays ny·DX$_n$ ist und die Ausgangssignale der Filter entsprechend dem Efficient-Golay-Korrelator-Algorithmus berechnet werden.

- es werden zur Berechnung der Teilkorrelationssummen der Efficient Golay Korrelationsalgorithmus und zu Ermittlung der gesamten Korrelation der Algorithmus für die hierarchische Korrelation verwendet.

Die vorliegende Erfindung ist nicht auf Funkübertragungssysteme beschränkt, sondern kann auch bei Verwendung anderer Übertragungsverfahren z.B. akustischer Verfahren (Ultraschall), insbesondere zu Zwecken der Sonographie, oder optischer Verfahren, beispielsweise die Infrarotmessung nach Lidar-Prinzipien eingesetzt werden. Ein weiteres Anwendungsgebiet ist die Untersuchung von Änderungen der spektralen Zusammensetzung von rückgestreuten Signalen.

## Patentansprüche

1. Verfahren zur Synchronisation zwischen einer Basisstation (BS) und einer Mobilstation (MS),

- bei dem eine Signalfolge K(i) der Länge 256 von der Basisstation (BS)ausgesendet wird, die dadurch erhältlich ist, daß eine zweite Signalteilfolge K2(k) der Länge n2=16 n1=16 mal wiederholt und dabei mit der ersten Signalteilfolge K1(j) der Länge n1=16 moduliert wird, wobei gilt:

$$K(i) = K2(i \bmod n2) * K1(i \ \mathrm{div}\ n2), \text{ für } i =0 \ ...n1*n2\text{-}1,$$

- wobei zumindest eine der Signalteilfolgen eine Goläysequenz $X_n(k)$ der Länge nx=n1=16 ist, die durch folgende Beziehung bildbar ist:

$$X_0\,(k) = \delta(k)$$

$$X'_0(k) = \delta(k)$$

$$X_n\,(k) = X_{n-1}(k) + W_n{\cdot}X'_{n-1}(k\text{-}D_n)$$

$$X'_n(k) = X_{n-1}(k) - W_n{\cdot}X'_{n-1}(k\text{-}D_n)\,,$$

$k = 0, 1, 2, ..., 2^{NX}\text{-}1$
$n = 1, 2, ..., NX$
$D_n = 2^{P_n}$
mit
nx=16=2$^{NX}$
NX=4
$\delta\,(k)$: Kroneckersche Deltafunktion,

- wobei die zur Bildung einer Signalteilfolge verwendete Permutation P$_1$, P$_2$, P$_3$, P$_4$ und Einheitsgröße W$_1$, W$_2$, W$_3$, W$_4$ folgender Menge von Permutation-Einheitsgrößen-Paaren (P$_1$ P$_2$ P$_3$ P$_4$ , W$_1$ W$_2$ W$_3$ W$_4$ ;) entnommen ist:
3201, +1-1+1+1; 3201, -1-1+1+1; 3201, +1-1-1+1; 3201, -1-1-1+1; 3201, +1+1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1; und

- bei dem die Signalfolge K(i) von einer Mobilstation empfangen wird und zu Synchronisationszwecken verarbeitet wird.

2. Verfahren nach Anspruch 1,
bei dem die Signalfolge K(i) nach folgendem Bildungsgesetz durch modulierte Wiederholung einer aus 16 Elementen bestehenden Signalteilfolge a erhältlich ist:
K = <a, a, a,. -a, -a, a, -a, -a, a, a, a, -a, a, -a, a, a>

3. Verfahren nach Anspruch 1,
wobei die Signalteilfolge K1(j) eine Golaysequenz ist, die durch die Delay-Matrix D = [8, 4, 1,2] und die Gewichts-Matrix W = [1, -1, 1,1] definiert ist.

4. Verfahren nach Anspruch 1,
wobei. die zur Bildung der ersten Signalteilfolge verwendete Permutation $P_1$, $P_2$, $P_3$, $P_4$ und Einheitsgröße $W_1$, $W_2$, $W_3$, $W_4$ folgender Menge von Permutation-Einheitsgrößen-Paaren ($P_1 P_2 P_3 P_4$ , $W_1 W_2 W_3 W_4$ ;) entnommen ist:
3201, +1-1+1+1; 3201, -1-1-1+1; 3201, -1-1+1-1; 3201, +1-1-1-1;, und die zur Bildung der zweiten Signalteilfolge verwendete Permutation ($P_1 P_2 P_3 P_4$ ) gleich 3201 ist.

5. Verfahren nach einem der vorhergehenden Ansprüche,
bei dem die Signalfolge K(i) als Teil einer Empfangssignalfolge E(1) durch die Mobilstation (MS) empfangen und zu Synchronisationszwecken weiterverarbeitet wird.

6. Verfahren nach einem der vorhergehenden Ansprüche,
bei dem die Signalfolge K(i) durch die Mobilstation (MS) ermittelt wird, wobei in der Mobilstation Kenntnisse über die erste und zweite Signalteilfolge K1(j) K2(k)herangezogen werden.

7. Verfahren nach einem der vorhergehenden Ansprüche,

- bei dem in der Mobilstation (MS) Korrelationssummen S der Signalfolge K(i) mit entsprechenden Abschnitten der Empfangssignalfolge E(1)bestimmt werden,
- wobei eine Teilkorrelationssummenfolge TS(z) der Signalteilfolge K2(k) mit entsprechenden Teilen der Empfangssignalfolge E(1) berechnet wird, und zur Berechnung einer Korrelationssumme S n1 Elemente der Teilkorrelationssummenfolge TS(z) ausgewählt werden und im Sinne eines Skalarproduktes mit der Signalteilfolge K1(j) multipliziert werden.

8. Verfahren nach Anspruch 7, bei dem
zur Berechnung einer Korrelationssumme S n1 jeweils n2-te Elemente der Teilkorrelationssummenfolge TS(z) ausgewählt werden.

9. Verfahren nach einem der Ansprüche 1 bis 6,

- bei dem in der Mobilstation (MS) Korrelationssummen S der Signalfolge K(i) mit entsprechenden Abschnitten der Empfangssignalfolge E(1)bestimmt werden,
- wobei eine Teilkorrelationssummenfolge TS(z) der Signalteilfolge K1(j) mit ausgewählten Elementen der Empfangssignalfolge E(1) berechnet wird, und zur Berechnung einer Korrelationssumme S n2 Elemente der Teilkorrelationssummenfolge TS(z) im Sinne eines Skalarproduktes mit der Signalteilfolge K2(k) multipliziert werden.

10. Verfahren nach Anspruch 9, bei dem
zur Berechnung einer Teilkorrelationssumme TS n1 jeweils n2-te Elemente der Empfangssignalfolge E(1) ausgewählt werden.

11. Verfahren nach einem der Ansprüche 7 bis 11, bei dem berechnete Teilkorrelationssummen TS abgespeichert werden und zur Berechnung einer weiteren Korrelationssumme S verwendet werden.

12. Verfahren nach einem der vorhergehenden Ansprüche , bei dem
in der Mobilstation (MS) zumindest teilweise zur Ermittlung der Signalfolge, insbesondere zur Berechnung zumindest einer Korrelationssumme, ein Efficient Golay Correlator (EGC) verwendet wird.

**13.** Basisstation (BS)

- mit Mitteln (SPE) zur Speicherung bzw. zur Bildung einer Signalfolge K(i), die dadurch erhältlich ist, daß eine zweite Signalteilfolge K2(k) der Länge n2=16 n1=16 mal wiederholt und dabei mit der ersten Signalteilfolge K1(j) der Länge n1=16 moduliert wird, wobei gilt: K(i) = K2(i mod n2) * K1(i div n2), für i =0 ...n1*n2-1,
- wobei zumindest eine der Signalteilfolgen eine Golaysequenz $X_n(k)$ der Länge nx=n1=16 ist, die durch folgende Beziehung bildbar ist:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n) ,$$

$k = 0, 1, 2, ..., 2^{NX}-1$
$n = 1, 2, ..., NX$
$D_n = 2^{P_n}$
mit
nx=16=$2^{NX}$
NX=4
$\delta(k)$: Kroneckersche Deltafunktion,

- wobei die zur Bildung einer Signalteilfolge verwendete Permutation $P_1$, $P_2$, $P_3$, $P_4$ und Einheitsgröße $W_1$, $W_2$, $W_3$, $W_4$ folgender Menge von Permutation-Einheitsgrößen-Paaren ($P_1 P_2 P_3 P_4$ , $W_1 W_2 W_3 W_4$ ;) entnommen ist:
3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1;, und
- mit Mitteln zur Aussendung dieser Signalfolge K(i) zum Zwecke der Synchronisation mit einer Empfangseinheit (MS).

**14.** Mobilstation (MS)

- die derart eingerichtet ist, dass sie zur Synchronisation zwischen einer Basisstation (BS) und der Mobilstation (MS) eine Synchronisationsfolge K(i) ermittelt, die dadurch erhältlich ist, daß eine zweite Signalteilfolge K2(k) der Länge n2=16 n1=16 mal wiederholt und dabei mit der ersten Signalteilfolge K1(j) der Länge n1=16 moduliert wird, wobei gilt: K(i) = K2(i mod n2) * K1(i div n2), für i =0 ...n1*n2-1,
- wobei zumindest eine der Signalteilfolgen eine Golaysequenz $X_n(k)$ der Länge nx=n1=16 ist, die durch folgende Beziehung bildbar ist:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n) ,$$

$k = 0, 1, 2, ..., 2^{NX}\text{-}1$
$n = 1, 2, ..., NX$
$D_n = 2^{P_n}$

mit

nx=16=2$^{NX}$
NX=4
$\delta$ (k): Kroneckersche Deltafunktion,

- wobei die zur Bildung einer Signalteilfolge verwendete Permutation $P_1$, $P_2$, $P_3$, $P_4$ und Einheitsgröße $W_1$, $W_2$, $W_3$, $W_4$ folgender Menge von Permutation-Einheitsgrößen-Paaren ($P_1 P_2 P_3 P_4$ , $W_1 W_2 W_3 W_4$ ;) entnommen ist:
3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1;.

## Claims

1. Method for synchronization between a base station (BS) and a mobile station (MS),

- in which the base station (BS) emits a signal sequence K(i) of length 256 which can be obtained by virtue of the fact that a second partial signal sequence K2(k) of length n2=16 is repeated n1=16 times and is modulated in the process by the first partial signal sequence K1(j) of length n1=16, in which case it holds true that:

$$K(i) = K2 \ (i \ mod \ n2) * K1(i \ div \ n2), \ for \ i = 0 \ ...n1*n2\text{-}1,$$

- in which at least one of the partial signal sequences is a Golay sequence $x_n(k)$ of length nx=n1=16, which can be formed using the following relationship:

$$X_0(k) = \delta(k)$$

$$X'_0(k) = \delta(k)$$

$$X_n(k) = X_{n-1}(k) + W_n \cdot X'_{n-1}(k\text{-}D_n)$$

$$X'_n(k) = X_{n-1}(k) - W_n \cdot X'_{n-1}(k\text{-}D_n),$$

$k = 0, 1, 2, ..., 2^{NX}\text{-}1$
$n = 1, 2, ..., NX$
$D_n = 2^{P_n}$

where

nx=16=2$^{NX}$
NX=4
$\delta$ (k): Kronecker delta function,

- in which the permutation $P_1$, $P_2$, $P_3$, $P_4$ and unit variable $W_1$, $W_2$, $W_3$, $W_4$ used to form a partial signal sequence is taken from the following set of permutation/unit variable pairs ($P_1$, $P_2$, $P_3$, $P_4$, $W_1$, $W_2$, $W_3$, $W_4$:)
3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1; and
- in which the signal sequence K(i) is received by a mobile station and processed for synchronization purposes.

2. Method according to Claim 1, in which the signal sequence K(i) is formed using the following formation law by modulated repetition of a partial signal sequence a consisting of 16 elements:
K = <a, a, a, -a, -a, a, -a, -a, a, a, a, -a, a, -a, a, a>.

3. Method according to Claim 1, in which the partial signal sequence K1(j) is a Golay sequence which is defined by the delay matrix D = [8, 4, 1, 2] and the weight matrix W = [1, -1, 1, 1].

4. Method according to Claim 1, in which the permutation $P_1$, $P_2$, $P_3$, $P_4$ and unit variable $W_1$, $W_2$, $W_3$, $W_4$ used to form the first partial signal sequence is taken from the following set of permutation/unit variable pairs ($P_1$, $P_2$, $P_3$, $P_4$, $W_1$, $W_2$, $W_3$, $W_4$) :
3201, +1-1+1+1; 3201, -1-1-1+1; 3201, -1-1+1-1; 3201, +1-1-1-1; and the permutation ($P_1$, $P_2$, $P_3$, $P_4$) used to form the second partial signal sequence is equal to 3201.

5. Method according to one of the preceding claims, in which the signal sequence K(i) is received by the mobile station (MS) as part of a received signal sequence E(1) and further processed for synchronization purposes.

6. Method according to one of the preceding claims, in which the signal sequence K(i) is determined by the mobile station (MS), use being made in the mobile station of knowledge relating to the first and second partial signal sequences K1(j) and K2(k).

7. Method according to one of the preceding claims,

   - in which correlation sums S of the signal sequence K(i) are determined in the mobile station (MS) with the aid of corresponding sections of the received signal sequence E(1),
   - in which a partial correlation sum sequence TS(z) of the partial signal sequence K2(k) with corresponding parts of the received signal sequence E(1) is calculated, and n1 elements of the partial correlation sum sequence TS(z) are selected in order to calculate a correlation sum S, and are multiplied by the partial signal sequence K1(j) to produce a scalar product.

8. Method according to Claim 7, in which n1 in each case n2-th elements of the partial correlation sum sequence TS (z) are selected to calculate a correlation sum S.

9. Method according to one of Claims 1 to 6,

   - in which correlation sums S of the signal sequence K(i) are determined in the mobile station (MS) with the aid of corresponding sections of the received signal sequence E(1), and
   - in which a partial correlation sum sequence TS(z) of the partial signal sequence K1(j) with selected elements of the received signal sequence E(1) is calculated, and n2 elements of the partial correlation sum sequence TS(z) are multiplied by the partial signal sequence K2(k) to produce a scalar product in order to calculate a correlation sum S.

10. Method according to Claim 9, in which n1 in each case n2-th elements of the received signal sequence E(1) are selected to calculate a partial correlation sum TS.

11. Method according to one of Claims 7 to 11, in which calculated partial correlation sums TS are stored and used to calculate a further correlation sum S.

12. Method according to one of the preceding claims, in which an efficient Golay correlator (EGC) is used in the mobile station (MS) at least partially for determining the signal sequence, in particular for calculating at least one correlation sum.

13. Base station (BS)

   - having means (SPE) for storing and/or forming a signal sequence K(i) which can be obtained by virtue of the fact that a second partial signal sequence K2(k) of length n2=16 is repeated n1=16 times and is modulated in the process by the first partial signal sequence K1(j) of length n1=16, in which case it holds true that:

$$K(i) = K2 \ (i \ mod \ n2) * K1(i \ div \ n2), \ for \ i = 0 \ ...n1*n2-1,$$

- in which at least one of the partial signal sequences is a Golay sequence $x_n(k)$ of length nx=n1=16, which can be formed using the following relationship:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

k = 0, 1, 2, ..., $2^{NX}$-1
n = 1, 2, ..., NX
$D_n = 2^{Pn}$

where
nx=16=$2^{NX}$
NX=4
$\delta(k)$: Kronecker delta function,

- in which the permutation $P_1, P_2, P_3, P_4$ and unit variable $W_1, W_2, W_3, W_4$ used to form a partial signal sequence is taken from the following set of permutation/unit variable pairs ($P_1, P_2, P_3, P_4, W_1, W_2, W_3, W_4$):
  3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1; and
- having means for emitting this signal sequence K(i) for the purpose of synchronization with a receiving unit (MS).

**14.** Mobile station (MS)

- which is set up in such a way that for the purpose of synchronization between a base station (BS) and the mobile station (MS) it determines a synchronization sequence K(i) which can be obtained by virtue of the fact that a second partial signal sequence K2(k) of length n2=16 is repeated n1=16 times and is modulated in the process by the first partial signal sequence K1(j) of length n1=16, in which case it holds true that:

$$K(i) = K2(i \bmod n2) * K1(i \operatorname{div} n2), \text{ for } i = 0 \ldots n1*n2-1,$$

- in which at least one of the partial signal sequences is a Golay sequence $x_n(k)$ of length nx=n1=16, which can be formed using the following relationship:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

k = 0, 1, 2, ..., $2^{NX}$-1

$$n = 1, 2, ..., NX$$
$$D_n = 2^{Pn}$$

where

$$nx = 16 = 2^{NX}$$
$$NX = 4$$
$\delta(k)$: Kronecker delta function,

- in which the permutation $P_1, P_2, P_3, P_4$ and unit variable $W_1, W_2, W_3, W_4$ used to form a partial signal sequence is taken from the following set of permutation/unit variable pairs $(P_1, P_2, P_3, P_4, W_1, W_2, W_3, W_4)$ :
3201, +1-1+1+1; 3201, -1+1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1.

**Revendications**

1. Procédé de synchronisation entre une station de base (BS) et une station mobile (MS),

- dans lequel une suite de signaux K(i) de longueur 256 est émise par la station de base (BS), laquelle peut être obtenue du fait qu'une deuxième suite partielle de signaux K2(k) de longueur n2 = 16 est répétée n1 = 16 fois tout en subissant une modulation avec la première suite partielle de signaux K1(j) de longueur n1 = 16, avec:

$$K(i) = K2 (i \bmod n2) * K1 (i \operatorname{div} n2) \text{ pour } i = 0, ..., n1*n2-1,$$

- au moins l'une des suites partielles de signaux étant une séquence de Golay $X_n(k)$ de longueur nx=n1=16, laquelle est constituable par la relation suivante:

$$X_0(k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

$$k = 0, 1, 2, ..., 2^{NX}-1$$
$$n = 1, 2, ..., NX$$
$$D_n = 2^{Pn}$$
avec
$$nx = 16 = 2^{NX}$$
$$NX = 4$$
$\delta(k)$: fonction delta de Kronecker,
- la permutation $P_1, P_2, P_3, P_4$, utilisée pour constituer une suite partielle de signaux, et la grandeur unitaire $W_1, W_2, W_3, W_4$ étant tirées de l'ensemble suivant de paires de permutation et de grandeurs unitaires $(P_1 \ P_2 \ P_3 \ P_4, W_1 \ W_2 \ W_3 \ W_4;)$:
3201, +1-1+1+1; 3201, -1+1+1+1; 3201, +1-1-1+1; 3201, -1-1-1+1; 3201, +1-1+1-1; 3201, -1+1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1 et
- dans lequel la suite de signaux K(i) est reçue par une station mobile et subit un traitement à des fins de synchronisation.

**2.** Procédé selon la revendication 1,
dans lequel la suite de signaux K(i) peut être obtenue selon la loi de formation suivante par répétition modulée d'une suite partielle de signaux a composée de 16 éléments:
K = <a, a, a, -a, -a, a, -a, -a, a, a, a, -a, a, -a, a, a>.

**3.** Procédé selon la revendication 1,
la suite partielle de signaux K1(j) étant une séquence de Golay qui est définie par la matrice de retard D = [8, 4, 1, 2] et la matrice de poids W = [1, -1, 1, 1].

**4.** Procédé selon la revendication 1,
la permutation $P_1$, $P_2$, $P_3$, $P_4$, utilisée pour constituer la première suite partielle de signaux, et la grandeur unitaire $W_1$, $W_2$, $W_3$, $W_4$ étant tirées de l'ensemble suivant de paires de permutation et de grandeurs unitaires ($P_1$ $P_2$ $P_3$ $P_4$, $W_1$ $W_2$ $W_3$ $W_4$;): 3201, +1-1+1+1; 3201, -1-1-1+1; 3201, -1-1+1-1; 3201, +1-1-1-1; et la permutation ($P_1$, $P_2$, $P_3$, $P_4$) utilisée pour constituer la deuxième suite partielle de signaux étant égale à 3201.

**5.** Procédé selon l'une des revendications précédentes,
dans lequel la suite de signaux K(i) est reçue en tant que partie d'une suite de signaux de réception E(1) par la station mobile (MS) et subit un traitement subséquent à des fins de synchronisation.

**6.** Procédé selon l'une des revendications précédentes,
dans lequel la suite de signaux K(i) est déterminée par la station mobile (MS), tout en étant qu'il est fait appel, dans la station mobile, à des connaissances sur les première et deuxième suites partielles de signaux K1(j) K2(k).

**7.** Procédé selon l'une des revendications précédentes,

- dans lequel des sommes de corrélation S de la suite de signaux K(i) sont déterminées dans la station mobile (MS) avec des parties correspondantes de la suite de signaux de réception E(1),
- une suite de sommes de corrélation partielle TS(z) de la suite partielle de signaux K2(k) étant calculée avec des parties correspondantes de la suite de signaux de réception E(1) et n1 éléments de la suite des sommes de corrélation partielle TS(z) étant sélectionnés pour le calcul d'une somme de corrélation S et étant multipliés par la suite partielle de signaux K1(j) au sens d'un produit scalaire.

**8.** Procédé selon la revendication 7, dans lequel, pour le calcul d'une somme de corrélation S, n1 respectivement n2<sup>ièmes</sup> éléments de la suite de sommes de corrélation partielle TS(z) sont sélectionnés.

**9.** Procédé selon l'une des revendications 1 à 6,

- dans lequel des sommes de corrélation S de la suite de signaux K(i) sont déterminées dans la station mobile (MS) avec des parties correspondantes de la suite de signaux de réception E(1),
- une suite de sommes de corrélation partielle TS(z) de la suite partielle de signaux K1(j) étant calculée avec des éléments sélectionnés de la suite de signaux de réception E(1) et n2 éléments de la suite des sommes de corrélation partielle TS(z) étant multipliés, pour le calcul d'une somme de corrélation S, par la suite partielle de signaux K2(k) au sens d'un produit scalaire.

**10.** Procédé selon la revendication 9, dans lequel,
pour le calcul d'une somme de corrélation partielle TS, n1 respectivement n2<sup>ièmes</sup> éléments de la suite de signaux de réception E(1) sont sélectionnés.

**11.** Procédé selon l'une des revendications 7 à 11, dans lequel
des sommes de corrélation partielle calculées TS sont mises en mémoire et sont utilisées pour le calcul d'une autre somme de corrélation S.

**12.** Procédé selon l'une des revendications précédentes, dans lequel
on utilise, dans la station mobile (MS), un efficient Golay correlator (EGC) au moins en partie pour la détermination de la suite de signaux, en particulier pour le calcul d'au moins une somme de corrélation.

**13.** Station de base (BS)

- comprenant des moyens (SPE) de mise en mémoire resp. de constitution d'une suite de signaux K(i), laquelle peut être obtenue du fait qu'une deuxième suite partielle de signaux K2(k) de longueur n2 = 16 est répétée n1 = 16 fois tout en subissant une modulation avec la première suite partielle de signaux K1(j) de longueur n1 = 16, avec:

$$K(i) = K2 \, (i \text{ mod } n2) * K1 \, (i \text{ div } n2) \text{ pour } i = 0, ..., n1*n2-1,$$

- au moins l'une des suites partielles de signaux étant une séquence de Golay $X_n(k)$ de longueur nx=n1=16, laquelle est constituable par la relation suivante:

$$X_0 \, (k) = \delta(k)$$

$$X'_0(k) = \delta(k)$$

$$X_n \, (k) = X_{n-1}(k) + W_n \cdot X'_{n-1}(k-D_n)$$

$$X'_n(k) = X_{n-1}(k) - W_n \cdot X'_{o-1}(k-D_n) \, ,$$

$k = 0, 1, 2, -, 2^{NX}-1$
$n = 1, 2, -, NX$
$D_n = 2^{P_n}$

avec
nx = 16 = $2^{NX}$
NX=4
$\delta$ (k): fonction delta de Kronecker,

- la permutation $P_1$, $P_2$, $P_3$, $P_4$, utilisée pour constituer une suite partielle de signaux, et la grandeur unitaire $W_1$, $W_2$, $W_3$, $W_4$ étant tirées de l'ensemble suivant de paires de permutation et de grandeurs unitaires ($P_1 P_2 P_3 P_4$, $W_1 W_2 W_3 W_4$,):
3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1-1-1+1; 1023, -1-1-1+1; 1023, +1+1-1-1; 1023, -1+1-1-1; 1023, +1-1-1-1; 1023, -1-1-1-1 et
- avec des moyens pour émettre cette suite de signaux K(i) aux fins de la synchronisation sur une unité réceptrice (MS).

**14.** Station mobile (MS)

- aménagée de manière telle que, aux fins de la synchronisation entre une station de base (BS) et la station mobile (MS), elle détermine une suite de synchronisation K(i), laquelle peut être obtenue du fait qu'une deuxième suite partielle de signaux K2(k) de longueur n2 = 16 est répétée n1 = 16 fois tout en subissant une modulation avec la première suite partielle de signaux K1(j) de longueur n1 = 16, avec:

$$K(i) = K2 \, (i \text{ mod } n2) * K1 \, (i \text{ div } n2) \text{ pour } i = 0, ..., n1*n2-1,$$

- au moins l'une des suites partielles de signaux étant une séquence de Golay $X_n(k)$ de longueur nx=n1=16, laquelle est constituable par la relation suivante:

$$X_0 \, (k) = \delta(k)$$

$$X'_0(k) = \delta(k)$$

$$X_n(k) = X_{n-1}(k) + W_n \cdot X'_{n-1}(k-D_n)$$

$$X'_n(k) = X_{n-1}(k) - W_n \cdot X'_{n-1}(k-D_n),$$

$k = 0, 1, 2, ..., 2^{NX}-1$
$n = 1, 2, ..., NX$
$D_n = 2^{P_n}$

avec

nx = 16 = $2^{NX}$
NX=4
$\delta(k)$: fonction delta de Kronecker,

- la permutation $P_1$, $P_2$, $P_3$, $P_4$, utilisée pour constituer une suite partielle de signaux, et la grandeur unitaire $W_1$, $W_2$, $W_3$, $W_4$ étant tirées de l'ensemble suivant de paires de permutation et de grandeurs unitaires ($P_1$ $P_2$ $P_3$ $P_4$, $W_1$ $W_2$ $W_3$ $W_4$;):
3201, +1-1+1+1; 3201, -1-1+1+1; 3201, +1-1-1+1; 3201, -1-1-1+1; 3201, +1-1+1-1; 3201, -1-1+1-1; 3201, +1-1-1-1; 3201, -1-1-1-1; 1023, +1+1-1+1; 1023, -1+1-1+1; 1023, +1 -1-1+1; 1023, -1-1-1+1; 1023, +1+1-1-1; 1023, -1+1-1-1; 1023, +1-1-1-1; 1023, -1-1-1-1;.

FIG 1

FIG 2

# FIG 3

FIG 4

FIG 5

EP 1 173 944 B1

FIG 6

| E(l) | 0 | • • | l-1 | l | l+1 | • • • | n-1 | | w-1 |
|------|---|-----|-----|---|-----|-------|-----|--|-----|

TS(0): K2(k)

| 0 | • • | k-1 | k | k+1 | • • | n2-1 |
|---|-----|-----|---|-----|-----|------|

TS(1): K2(k)

| 0 | • • | k-1 | k | k+1 | • • | n2-1 |
|---|-----|-----|---|-----|-----|------|

•
•
•

TS(n1*n2-1): K2(k)

| 0 | • • | k-1 | k | k+1 | • • | n2-1 |
|---|-----|-----|---|-----|-----|------|

FIG 7

# FIG 8

FIG 9

## FIG 10

# FIG 11